# EUROPEAN PATENT SPECIFICATION

(11) **EP 3 321 416 B1**
(45) Date of publication and mention of the grant of the patent: **30.12.2020**
(21) Application number: 16821625.7
(22) Date of filing: 05.07.2016
(51) Int. Cl.: B29C 65/00, B29C 65/52, B32B 7/14, B32B 5/26, D06H 5/00, D06C 23/00, D06M 17/00, A41D 27/24, A41H 43/04, B29C 65/48, B29C 65/72, B29C 65/04, B29C 65/50, B29L 31/48, B29C 65/62, B29C 65/82

(54) **METHOD FOR SEAMLESSLY COUPLING FABRIC USING BONDING PATTERN LINE FORMED BY HIGH-FREQUENCY BONDING TECHNIQUE**
VERFAHREN ZUM NAHTLOSEN VERBINDEN VON GEWEBE MITTELS EINER DURCH HOCHFREQUENZTECHNIK GEBILDETEN BONDMUSTERLINIE
PROCÉDÉ DE COUPLAGE SANS COUTURE DE TISSU À L'AIDE D'UNE LIGNE DE MOTIF DE LIAISON FORMÉE PAR UNE TECHNIQUE DE LIAISON HAUTE FRÉQUENCE

(30) Priority: 09.07.2015 KR 20150097933
(43) Date of publication of application: 16.05.2018
(73) Proprietor: Hojeon Limited, Seoul 04165 (KR)
(72) Inventor: PARK, Young Chul, Seoul 06082 (KR)
(74) Representative: Nony
(86) International application number: PCT/KR2016/007261
(87) International publication number: WO 2017/007219

(56) References cited:
- WO-A1-2016/052839
- GB-A- 2 520 600
- JP-A- H1 156 597
- JP-A- 2000 328 462
- JP-A- 2000 328 462
- KR-A- 20020 001 239
- KR-A- 20040 001 095
- KR-A- 20040 001 095
- KR-A- 20100 081 172
- KR-A- 20120 100 566
- KR-B1- 101 513 709
- KR-U- 20100 001 821
- US-A1- 2011 072 558

## Description

### Technical Field

The present invention relates to a method of combining fabrics in a seamless manner using bonding pattern lines formed by high-frequency bonding technique. More specifically, the present invention relates to a method of combining two fabrics in a seamless manner, comprising, printing an adhesive on an outer fabric, an optional reinforced material and an inner fabric in a predetermined printing pattern, drying the adhesive, laminating the outer fabric, the optional reinforced material and the inner fabric, and heating and pressing the fabrics by means of a high-frequency bonding technique to bond the fabrics, thereby an inner bonding line is formed inside the fabrics and a surface pattern line is formed outside surface of the fabrics.

### Background Art

Needlework (sewing) means threading a needle to make clothes or sew fabrics, and generally, combining of fabrics in products using fabrics such as garments, bedding, rag dolls and ornaments is carried out in a manner of sewing (needlework).

In case of combining fabrics by sewing, various problems may arise due to the needle holes or the thread inserted into the needle holes (sewing thread), depending on the types of the fabrics used or the types of the garment product manufactured.

For example, in down products, an exudation of down and an introduction of moisture through sewing holes or needle holes causing odor or decaying of duck feathers, etc. have long been at issue, and in coating fabrics with special functions on the surfaces, there is a concern that the function of the coating fabric can be damaged by the needle holes. Moreover, the thread used in sewing may cause damage to the garment if it is caught by another object while in use, and may be cut while in use causing the problem of the combining part being loosened.

For these reasons, it has been suggested to seal the needle holes and/or sewing thread with other rags or fabrics, preventing introduction of moisture through the needle holes and exudation of the wadding material, etc., but this is causing another problem of complexity of the manufacturing process and a rise in manufacturing costs.

As a seamless bonding method that does not go through a manpower- and time-consuming sewing process, there has been suggested a bonding method using an adhesive such as hot melt and a fusing method by a fabric fusing. However, such bonding method and fusing method are also difficult to be mechanized, and thus became a manpower- and time-consuming process themselves. Further, due to damage to the fabrics by a fabric fusing or the like, a limitation in selecting fabrics, and a lack of adhesiveness and durability with the heat-melting adhesion method, there have been limitations in putting these methods to practical use at actual manufacturing places.

For example, heating and pressing the fabric to melt the surface fused thereby combining the fabrics, the method being fusion bonding method, is only applicable to fabrics that the surface fusion is possible, and thus the method has its restrictions in that it is applicable to only fabrics consisting of synthetic textile or some of the surface-coating fabrics, and moreover, the method has problems that the bonding by surface fusion only occurs on the surface of the fabric and thus the bonding strength is insufficient and the method may cause damage to the fabric itself. The bonding method of combining the fabrics with a solvent-dissolved solid adhesive, such as hot melt, is applicable to non-synthetic textiles, but this requires an inserting process of inserting hot melt in the bonding part and a fixing process of fixing, and due to the low adhesive durability of the hot melt adhesive, there is a problem of frequent deviation of the bonding part when in use.

Meanwhile, a new quilting method using a high-frequency heating has been suggested. Japanese Patent Laid-Open No. 2000-328462 discloses a technology of inlaying a quilting pattern on the surface by introducing a curing-reactive liquid adhesive via an injection needle between an inner fabric and an outer fabric, and bonding the inner fabric, the intermediate layer and the outer fabric together by a high-frequency heating and pressing. This document discloses that, by high-frequency heating and pressing the curing-reactive liquid adhesive introduced into the intermediate layer, the fabric and the intermediate layer are press-bonded at the inside, and a pattern of a pressing tip is inlaid on the surface. However, since the liquid adhesive introduced into the inside can spread around during the pressing, the adhesion condition of the inside would vary and cannot be uniform. Thus, the finishing of the adhering line would be very poor and uneven. Further, the needle holes created when introducing the adhesive may be the cause of damage to the fabric and a penetration of moisture.

Under such circumstances, there have been suggested a method of applying and drying a heat-reactive adhesive on a fabric (material), followed by high-frequency heating under a pressing, and thereby to form inner bonding line between the materials and compartment separation line of the down product in a seamless manner.

Korean Patent Application Nos. 10-2014-0132528 and 10-2014-0132529 propose a down product using bonding pattern line as the compartment separation line of the down product, the line produced by high-frequency bonding technique using adhesives, method and the apparatus for manufacturing the same. The bonding pattern line, by printing an adhesive on an inner fabric and/or an outer fabric in a predetermined printing pattern, drying the adhesive, laminating the inner fabric and the outer fabric, and heating and pressing the fabrics by means of a high-frequency bonding technique to bond the outer fabric and the inner fabric, is formed being the inner bonding line inside the material and the surface pattern line of the material surface integrated. The bonding pattern line is formed by curing the heat-curable adhesive, and thus it has bonding strength of not less than that of the manner of sewing, and because it is formed in a seamless manner, down exudation and moisture introduction through needle holes can be prevented fundamentally. Patent document US 2011/0072558 A1 discloses a process of attaching a supplemental layer to a base layer of fabric by first printing a thermoplastic ink onto a backing sheet and transferring it to the base layer of fabric then peeling the backing sheet and bonding the supplemental material. Patent document KR 101513709B1 describes a process for manufacturing rubber gloves wherein a waterproof sleeve is fixed to the upper portion of the glove by high frequency welding.

Korean Patent Application No. 10-2015-0094248 and PCT/KR2015/006776 explains that when the bonding pattern line formed by the high-frequency bonding technique is formed, by inserting reinforcing material between the inner fabric and the outer fabric or inserting an adhesive-fixed reinforced material, bonding strength, durability and finishing quality are more improved and the manufacturing method can become simpler.

From such technical background, there has been a suggestion that the technology of using an adhesive to form a bonding pattern line by high-frequency bonding technique, using the line as a compartment separation line, is applicable in garment products other than down products, when combining fabrics in a seamless manner. That is, in the manufacturing process of outdoor and sportswear using moisture-permeable waterproof fabric, underwear such as underpants and brassieres, and garments for diabetes patients, who may have skin damage by the seam, there is a possibility of combining fabrics in a seamless manner without causing problems in adhesiveness, adhesive durability and adhering line finishing in fabric bonding areas.

### Summary of the Invention

### Technical Task

The bonding pattern lines formed by high-frequency bonding technique using an adhesive have an excellent adhesiveness and adhesive durability, and the pattern lines on the fabric surface are clear and their finishing quality is excellent, and thus is aesthetically excellent, and thus research and development continued for a method of combining fabrics in a seamless manner using the same.

### Means for Achieving the Task

The present invention makes it possible to form a bonding pattern lined composed of an inner bonding line inside the fabric and a surface pattern line outside the material, and thereby combine the materials (fabrics) without forming sewing holes and without causing any damage to the fabric, by printing a heat-reactive adhesive liquid on the inner surface of an inner fabric, an optional reinforced material and/or an outer fabric in a predetermined printing pattern, drying it, laminating the inner fabric, the optional reinforced material and the outer fabric, and then high-frequency heating them under compression in a pressing pattern coinciding with the printing pattern to bond the inner fabric, optional reinforced material and outer fabric with the cured adhesive liquid. Moreover, in the bonding pattern line described above, the inner bonding line has an excellent adhesiveness and durability, and the surface pattern line is clear and its finishing quality is excellent, and the inner bonding line and the surface pattern line are unified as an identical pattern.

### Effect of the Invention

The method of the present invention provides a seamless combining method for fabrics by a bonding pattern line composed of a bonding line with an excellent adhesiveness and durability, and a pattern line with aesthetical excellency due to its clearness and good finishing quality, by using high-frequency bonding technique using a heat-reactive adhesive.

### Brief Description of the Drawings

FIG. 1 is a drawing illustrating the fabrics combined by a bonding pattern line of a dotted line pattern, the combining manner and the structure of the same in a diagram.
FIGS. 2 and 3 are drawings illustrating the process that adhesive-fixed fabrics (FIG. 2) or fabrics wherein adhesive-fixed reinforced material is inserted (FIG. 3) are high-frequency bonded by a wheel-type pressing roller to form a bonding pattern line of a dotted line pattern in a diagram.
FIG. 4 is a drawing illustrating the structure of a bonding pattern line formed by using a reinforced material; the drawings (a) and (c) illustrate an adhesive-fixed reinforced material which is continuously inserted and a sectional structure of the bonding pattern line comprising the same; and the drawings (b) and (d) illustrate an adhesive-fixed reinforced material which is discontinuously inserted and a sectional structure of the bonding pattern line comprising the same.
FIG. 5 is a conceptual diagram explaining the behavior of an adhesive liquid when a high-frequency bonding is carried out in a state where the adhesive liquid is sufficiently dried to properly adjust the fluidity to form a bonding pattern line.
FIG. 6 is a conceptual diagram explaining the behavior of an adhesive liquid when a high-frequency bonding is carried out in a state where the adhesive liquid has an excessive fluidity to form a bonding pattern line.
FIG. 7 is a conceptual diagram explaining a process wherein a bonding pattern line composed of an inner bonding line and a surface pattern line is formed by subjecting fabrics printed with an adhesive to a high frequency bonding (a high frequency dielectric heating and pressing).
FIG. 8 is a conceptual diagram explaining the shape and problem of the bonding pattern line in a case where the width of a printing pattern is different from that of a pressing pattern; which explains the behavior of the adhesive and the shape of the bonding pattern line according to the width difference between the printing pattern and the pressing pattern.
FIG. 9 is a drawing illustrating an example of a manufacturing device which can carry out the present invention.
FIG. 10 is a drawing illustrating a process of printing an adhesive on a fabric in order according to the roller printing technique.
FIG. 11a is a drawing illustrating a press for printing in which a printing pattern of a continuous net pattern is carved and a press for pressing in which a corresponding pressing pattern is protruded; and FIG. 11b is a drawing illustrating a roller for printing in which a printing pattern is carved and a roller for pressing in which a corresponding pressing pattern is protruded.
FIGS. 11c and 11d are drawings illustrating a wheel-type printing roller in which a printing pattern of a straight line pattern is carved and a wheel-type pressing roller in which a corresponding pressing pattern of a straight line pattern is protruded.
FIG. 11e is a drawing illustrating a wheel-type printing roller in which a printing pattern of a dotted line pattern is carved.
FIG. 12 is a conceptual diagram illustrating the concept of a printing pattern coinciding with a pressing pattern, which shows a condition that the pressing pattern of the protruded pressing tip, the printing pattern of the adhesive printed on an outer fabric, and the printing pattern of the adhesive printed on an inner fabric are aligned to coincide with each other.
FIG. 13 is a photograph showing a bonding pattern line formed by the high-frequency bonding technique according to the present invention; it illustrates that patterns in the form of nets are continuously formed on the surface of the outer fabric.
FIG. 14 is a drawing illustrating the surface and structure of a double fabric or down product having a bonding pattern line for compartment separation formed by the high-frequency bonding technique; the drawing (a) shows an outer surface of a fabric on which a pattern line of a tilde symbol (or a wave design) is formed; the drawing (b) is a sectional view showing the inner structure cut along the A-A cutting line; and the drawing (c) is an oblique view of the overall shape around the fabrics and the bonding pattern line.
FIG. 15 is a drawing illustrating the surface and structure of a double fabric or down product having a bonding pattern line for compartment separation formed by the high-frequency bonding technique; the drawing (a) shows an outer surface of a fabric on which a pattern line of a dotted line pattern is formed; the drawing (b) is a sectional view showing the inner structure cut along the A-A cutting line; and the drawing (c) is an oblique view of the overall shape around the fabrics and the bonding pattern line.

### Embodiments for Carrying out the Invention

The first purpose of the present invention is to form a bonding pattern line by high-frequency heating an inner fabric and an outer fabric under pressing using an adhesive, and thereby provide a seamless combining method for combining the inner fabric and the outer fabric, wherein the adhesive is applied to the inner surface of the inner fabric, the inner surface of the outer fabric, or both, or attached to an optional mesh-type reinforced material to be inserted between the inner fabric and the outer fabric for use.

According to one embodiment of the present invention, the adhesive can be applied directly to the inner fabric and the outer fabric, and accordingly, the seamless combining method for fabrics can be performed in accordance with the steps below:
(1) a preparing step of preparing an inner fabric and an outer fabric,
(2) a printing step of printing a heat-reactive liquid adhesive in a predetermined printing pattern on an inner surface of the inner fabric or on an inner surface of the outer fabric, preferably on the inner surfaces of both the inner fabric and the outer fabric,
(3) a drying step of drying the liquid adhesive printed on the inner surface of the inner fabric or on the inner surface of the outer fabric,
(4) a laminating step of laminating the inner fabric and the outer fabric, and
(5) a high-frequency bonding step of high-frequency heating and simultaneously pressing both the laminated inner and outer fabrics in a pressing pattern which is the same pattern as said printing pattern to form a bonding pattern line.

According to another embodiment of the present invention, the adhesive is not applied directly to the inner fabric and the outer fabric, but the adhesive can be used in a form of an adhesive-fixed reinforced material manufactured by applying the adhesive to other reinforced material, and drying it, and accordingly, the seamless combining method for fabrics can be performed in accordance with the steps below:
(1) a preparing step of preparing an inner fabric and an outer fabric,
(2) a printing step of printing a heat-reactive liquid adhesive in a predetermined printing pattern on a mesh-type reinforced material,
(3) a drying step of drying the liquid adhesive printed on the mesh-type reinforced material,
(4) a laminating step of laminating the outer fabric, the mesh-type reinforced material and the inner fabric, and
(5) a high-frequency bonding step of high-frequency heating and simultaneously pressing the laminated outer fabric, mesh-type reinforced material, and inner fabric in a pressing pattern which is the same pattern as said printing pattern to form a bonding pattern line.

The printing of the adhesive can be carried out by applying or printing by a common printing technology, and an example of the printing technology can include a stamping printing technology, a pressing press printing technology, a roller printing technology or a screen printing technology. Said printing pattern has a width of 1∼20 mm, specifically 2∼15 mm, preferably 3∼10 mm.

As the heat-reactive adhesive, it is possible to employ, without limitation, any type of adhesive that can react by heating to exhibit an adhesion power (or adhesiveness), and a non-limited example thereof can include an epoxy-type adhesive. Such adhesive can further contain a curing agent, a diluent and/or a retardant in an amount of 5∼15 %w/w.

In the present invention, said adhesive is preferably a type that is liquid at a room temperature or can be liquefied with a solvent or the like. The liquid adhesive or the liquefied adhesive may have a viscosity of 1∼500 mPa.s, specifically 5∼300 mPa.s, preferably 10∼200 mPa.s, depending on its printing convenience.

According to one embodiment of the present invention, the drying of an adhesive can be carried out to an extent that the adhesive is not transferred even when an inner fabric and an outer fabric come into contact with each other or are rubbed against each other, which can be achieved, for example, by carrying out the drying at a temperature of 50∼100 °C and for 1 min ∼ 60 min.

According to an embodiment of the present invention, in the laminating step (4) of laminating an outer fabric and an inner fabric, it is necessary to adjust the position of the fabrics to coincide their printing patterns with each other. This step of adjusting the position of the fabrics may comprise a step of measuring the location of the fabric or location of the printing pattern and a step of adjusting the location of fabrics or the delivery speed of fabrics. In a case that the adhesive is printed only on one fabric, because a predetermined intended adhering line may exist even on a fabric where the adhesive is not printed, the step of adjusting the position may be necessary in order to coincide the printing pattern with the intended adhering line.

The high-frequency bonding step (5) according to the present invention may be carried out by heating under high frequency and simultaneously pressing the fabrics on which the adhesive is attached or printed in a predetermined printing patter that is the same pattern as the printing pattern. Such pressing and high frequency heating can be simultaneously carried out by using, for example, a high-frequency pressing roller or press in which a protrusion (or pressing tip) with a pressing pattern is formed.

According to another embodiment of the present invention, said high-frequency bonding is carried out with a dielectric heating method or an induction heating method by using an ultrasonic or high-frequency wave of 7 kHz ∼ 400 kHz for 1∼30 seconds.

Hereinafter, the present invention will be explained in more detail with reference to the drawings.

The terms used in the specification of the present invention are as follows:

The terms "sewing line," "adhering line" and "fusing line" respectively mean an area in a linear form or belt form wherein an inner fabric and an outer fabric are bonded physically or chemically by a sewing, a bonding with an adhesive, and a fusing of the fabric surface, and all of which can be referred to as "combining line". In some cases, they can be referred to as a sewing combining line, a fusing combining line or an adhering combining line. The term "bonding line" means "a combining line" wherein an inner fabric and an outer fabric are physically or chemically connected by a manner such as fusing, adhering or the like, but excludes a sewing line.

The term "intended combining line" or "combining-intended line" does not mean a physical or actual combining line, but an imaginary or virtual region or range where a combining line is to be located. In some cases, its location or region may be indicated with ink, dye or the like on a fabric surface. The term "intended sewing line" and "intended adhering line" also have a similar meaning.

The term "pattern line" means a pattern of a linear or belt shape that can be visibly recognized on a fabric surface due to the difference in surface texture or the difference in microstructure of the surface (minute surface structure), which can be formed permanently or semi-permanently on the pressed side of the fabric surface at the time of heating and pressing the fabric. Examples of a pattern line may include a hot-pressed pattern formed permanently or semi-permanently on the fabric surface, a sewing line pattern seen on the fabric surface, and a pattern formed by an adhesive oozing out to the fabric surface, etc. According to a sewing method, the combining line on the inner surfaces is the same as a pattern line on the surface, but according to a fusing method, the combining line (i.e., fusing line) on the inner surfaces of the fabrics may be different from the pattern line on the fabric surface. When hot pressing the fabric surface, a surface pattern line may be formed even without forming an inner bonding line.

The term "inner fabric material" and "outer fabric material" have substantially the same meanings as "inner fabric" and "outer fabric", but the term "inner fabric material" may be used to refer to fabric before being cut, and the term "inner fabric" may be used to refer to fabric after being cut.

Hereinafter, important features and processing steps of the present invention are explained in detail

### 1. Fabric

There is no particular limitation in the fabric that can be used in the present invention, and it is possible to use all of general fabrics, down-proof fabrics and functional fabrics. An inner fabric and an outer fabric may be the same or different.

General fabric means a common fabric made of natural fiber and/or synthetic fiber, and for example, mention can be made of cotton fabric, satin (silk) fabric, linen fabric, wool fabric, nylon fabric, polyester fabric, polyester/wool fabric, T/C (Teflon-coating) fabric, oxford fabric, suede fabric, felt fabric, Jacquard fabric, fiber or yarn-dyed fabric, piece-dyed fabric, or the like. However, such general fabric is not widely used as inner fabric or outer fabric for down products.

Down-proof fabric means fabrics that have been processed or manufactured in a special way to be suitable to fill with fluffs, feathers or down, and generally refers to all fabrics that have been processed or down-proof processed so that down does not leak or escape outside.

For example, it can be mentioned to weave 100% cotton, T/C (mixed yarn of polyester-cotton), ultra fine fiber, Gore-Tex or the like in a very high density so that feathers or the like do not escape, and then to carry out a processing wherein the strands are pressed down by applying a strong pressure with a calendar.

Functional fabric is a fabric provided with functions such as waterproof property, moisture permeability, air permeability or the like by means of film, coating or the like. All breathable coating fabrics are a functional fabric. For example, mention can be made of Gore fabric, Hyvent fabric and all functional fabrics manufactured by Kolon, Shinhan, or the like. Such functional fabric itself may be considered as a down proof fabric.

As a non-limited example of the breathable functional fabric being sold in the market, mention can be made on Gore-Tex (W.L. Gore & Associates product), Proact (Hyosung T&C product, a polyurethane resin film, a wet-type laminating method), HiPora (Kolon product, a polyurethane coating), Hill-Tex (Hopehill product, using a resin film), High Flex (New World product; using Hytrel which is a moisture-permeable waterproof polyester elastomer resin of Dupont), Entrant (Japan Toray, coating a polyurethane resin liquid directly on a fabric), or the like.

The present invention can be usefully applied particularly to combining of fabrics in particular in which the forming of needle holes is not preferable (for example, functional fabrics, coating fabrics), or in which sewing cannot be easily applied (for example, special fabrics, internally reinforced fabrics).

### 2. Adhesive

According to the present invention, the adhesive can be used in the form of a liquid adhesive (hereinafter, also referred to as "adhesive liquid") which is in liquid phase at room temperature or processing temperature and can be changed into solid or semi-solid phase by drying. The liquid adhesive (or adhesive liquid) can sufficiently permeate into an inner fabric or an outer fabric, and can be heat-cured during a high-frequency heating to firmly bond the inner fabric and outer fabric.

An adhesive that is solid at room temperature or processing temperature can be employed in the form of an adhesive liquid or adhesive composition after being dissolved in a solvent. The adhesive can be applied in a liquid state during its application and can be fixed in a semi-solid or solid state on a fabric surface by removing of the solvent by drying. Since the adhesive is dried, it is not transferred or stained onto others, or its applied pattern not changed, when the fabrics come into contact together or are rubbed against each other during the laminating step.

An adhesive that is solid at room temperature and does not heat react by slight heating can also be employed. For example, an adhesive which does not react to high-frequency heating but is capable of being melted employed in the form of an adhesive liquid or adhesive composition after being dissolved in a solvent. The adhesive can be applied in a liquid state during its application and can be fixed in a semi-solid or solid state on a fabric surface by removing of the solvent by drying. Since the adhesive is dried, it is not transferred or stained onto others, or its applied pattern not changed, when the fabrics come into contact together or are rubbed against each other during the laminating step.

In general, as an adhesive for adhering a fiber or a fabric, mention can be made on a heat-melting type adhesive, a solvent-volatilizing type adhesive, or a chemical-reaction type adhesive.

The heat-melting type adhesive is a type of adhesive that is solid at room temperature and can be melted by heating and then solidified by cooling for adhesion. It typically includes a hot melt adhesive, and specifically includes, for example, a polyamide resin, a polyolefin resin, a polyester resin, or the like.

The solvent-volatilizing type adhesive is a type of adhesive that is solid at room temperature and can be dissolved in a solvent and then solidified by volatilizing the solvent for adhesion. For example, mention can be made on an organic solvent-soluble adhesive (e.g., chloroprene, urethane resin), a water-soluble adhesive (e.g., polyvinyl alcohol) and a water-dispersible adhesive (e.g., polyvinyl acetate, polyacrylic emulsion).

The chemical-reaction type adhesive is a type of adhesive that can exert adhesion by chemical reactions such as polymerization, condensation, grafting or the like. Specifically, it can be classified into a one-liquid type adhesive that can initiate a chemical reaction by heat, light or the like, and a two-liquids type adhesive which can initiate a chemical reaction by a mixture of components. The one-liquid type chemical-reaction adhesive can be exemplified by a heat-curing adhesive (e.g., epoxy resin), a moisture-curing adhesive (e.g., silicone resin), a UV-curing adhesive (acryl oligomer resin), and the two-liquid type chemical reaction adhesive can be exemplified by a condensation reaction adhesive (urea type), an additive reaction adhesive (epoxy resin), a radical polymerization adhesive (acryl oligomer).

In the present invention, it is preferable to employ a high-frequency heat bonding adhesive as an adhesive. The "high-frequency heat bonding adhesive" is not a type particularly restricted or sold separately, but refers to any heat-reactive adhesive showing adhesion by reaction when heated by an external energy source such as heat, high frequency or the like. Specifically, mention can be made of a heat-curing adhesive such as an epoxy-type adhesive, an acryl-type adhesive and a urethane-type adhesive. In some cases, the heat-reactive adhesive may form a chemical bonding with a fabric and/or a substance coated on the fabric by a polymerization, a condensation or a grafting, and in this case, the adhesion quality can be further improved.

According to the present invention, an adhesive is heat-reacted or heat-cured by a high frequency heating or the like to bond fabrics. It is preferable to employ an adhesive that can provide a product that can maintain the flexibility of fabrics even after proceeding the reaction.

There is no particular limitation in the solvent which can be used for the adhesive composition or adhesive liquid according to the present invention as far as it can be easily volatilized or removed when necessary, does not deform the fabric, and does not cause a bad effect on the fabric. A non-restrictive example of the solvent that can be used can be exemplified by alcohols (methanol, ethanol, propanol, butanol, etc.), esters (methyl acetate, ethyl acetate, etc.), ethers (dimethyl ether, diethyl ether), ketones (acetone, methylethylketone), aliphatic hydrocarbons (pentane, hexane, hexane, cyclopentane, cyclohexane, etc.), aromatic hydrocarbons (benzene, toluene, etc.), halogenated hydrocarbons (chloroform, dichloroethane), or the like. An adhesive generally sold may contain a solvent or solvate, and such solvent or solvate may also be deemed as the above solvent.

There is no particular limitation in the amount or ratio of solvent used in an adhesive liquid or adhesive composition. It can be properly, optionally selected during the process by a person having ordinary skill in the art, so that the solvent can have a viscosity that enables an adhesive liquid to be used in a roller printing or screen printing process. The viscosity of the adhesive liquid is not critical and can be selected commonly from the range of 0.1∼1000 mPa.s, particularly from the range of 1∼500 mPa.s, preferably from the range of 2∼100 mPa.s, and more preferably from the range of 3∼50 mPa.s. If the viscosity of the adhesive liquid is too high, it may not permeate into a fabric or cannot bond well to a fabric surface.

According to one embodiment of the present invention, the adhesive composition or adhesive liquid may be a mixture of a heat-reactive adhesive (a heat-curable adhesive) and a solvent, and can further contain a diluent, a curing agent (a curing promoter) and an optional retardant.

In the adhesive composition mentioned above, the content or ratio of each component is not particularly limited and can be properly adjusted according to the process conditions. For example, in an adhesive composition, the adhesive and solvent can be contained in a ratio of 80∼99%w/w and preferably in a ratio of 85∼95%w/w; and the solvent can be selected from 50%w/w or less, preferably from 30%w/w or less, and more preferably from 10%w/w or less based on the weight of the adhesive. Even in such case, it is preferable to adjust the viscosity of the adhesive liquid within the above range, particularly within the range of 1∼500 mPa.s. In an adhesive composition, the curing agent, diluent and retardant can each be used in an amount of 1∼10%w/w, and preferably in an amount of 2∼7%w/w. If necessary, the solvent, diluent, retardant or the like may not be used. For example, a retardant may not be added into an adhesive composition when the adhesive composition is printed by a screen printing process.

According to one preferable variant of the present invention, the adhesive composition may comprise a pigment or dye in an amount of 1∼20%w/w. There is no particular limitation in the types of the pigment and dye that can be employed, but it is advisable to employ a type which is not decolored or deformed during a high-frequency heating, or which can be colored or deformed as intended.

Meanwhile, the heat-reactive adhesive can be a reactive monomer, a polymer having a reactive group or a mixture thereof, and can be used in the form of a composition comprising a thermosetting curing agent for initiating or promoting the curing by heat.

In addition to a heat-reactive adhesive, the adhesive composition according to the present invention may contain other types of adhesives, if necessary, and it is possible to contain, for example, a heat-melting adhesive and/or solvent-volatilizing adhesive, for example, up to an amount of 50% by weight.

### 2-1. Epoxy-type adhesive

According to a preferable embodiment of the present invention, as a heat-reactive adhesive, it is possible to use an epoxy-type adhesive. The curing of an epoxy-type resin can be carried out generally at a temperature of 10∼40 °C for a room temperature curing, at a temperature of 60∼100 °C for an intermediate temperature curing, and at a temperature of 140 °C or higher for a high temperature curing, and the curing time can be varied from a couple of hours to 24 hours or more. Therefore, it is possible to adjust the curing speed by using a curing promoter or a curing retardant, if necessary.

In general, terminal groups which can promote a curing can be exemplified by -OH, -COOH, -SO₃H, -CONH₂, -CONHR, -SO₃NH₂, SO₃NHR or the like and terminal groups which can retard a curing can be exemplified by -OR, -COOR, -SO₃R, -CONR₂, -CO, - CN, -NO₂ (wherein R is an alkyl group having 1∼6 carbon atoms, but is not particularly limited thereto), or the like.

As curing promoters (i.e., curing agents), amine and acid are mainly used. Examples of amine-curing promoters can include phenols such as phenol, cresol, nonylphenol, bisphenol-A or the like, DMP-30, polymercaptans, and examples of acid-curing promoters can include benzyl methyl amine, DMP-30, pyridine, K-61B, Lewis acids, Lewis bases.

In general, as an amine-curing promoter, it is preferable to use compounds having - OH group such as phenol and alkyl phenol, tertiary amines or the like, and as promoters for fast curing at a low temperature, it is preferable to use compounds having -SH group such as mercaptans.

The main purpose of diluents is to lower the viscosity by being added to an epoxy-type resin or a curing agent. It plays a role that improves the properties of flowing and defoaming during use or improves the ability of a penetration, or a role that enables a filler to be effectively introduced. In general, different from solvents, the diluents are not volatile, but remain in a cured product during a resin-curing process. Diluents can be classified into a reactive diluent and a non-reactive diluent. Here, the reactive diluents have one or more epoxy groups and participate in the reaction to enter a cured product in a cross-linking structure, and the non-reactive diluents are only physically mixed and dispersed within a cured product.

Since reactive diluents may decrease the mechanical, thermal, chemical or electrical properties of a cured product, it would be preferable to use a diluent having one functional group only when used for the purpose of reducing a viscosity. By using a multifunctional diluent, it is possible to prevent the deterioration of the properties to a certain extent. Reactive diluents that are generally widely used can be exemplified by butyl glycidyl ether (BGE), phenyl glycidyl ether (PGE), aliphatic glycidyl ether (C12 ∼ C14), modified tert-carboxyl diglycidyl ester, and various others.

Non-reactive diluents should be compatible with epoxy resin or curing agent and should be non-volatile and have low viscosity. Also, since they are not chemically bonded in a cured product, they could ooze out to the surface when excessively used, and thus the amount of diluent to be used should be determined after sufficient experiments. Non-reactive diluents generally used can be exemplified by dibutyl phthalate (DBP), dioctyl phthalate (DOP), nonyl-phenol, Hysol, and various others. When selecting diluents, it is necessary to consider the purpose of use and the properties of resin component. For the use of a general civil engineering field, BGE is mainly used, and in a field requiring said properties such as molding, impregnating or the like, PGE (phenyl glycidyl ether), CGE (cresyl glycidyl ether), SO or the like are used rather than BGE.

Diluents give a diluting effect as well as greatly affect the change in curing properties of the resin required in addition to the diluting effect. When selecting a diluent, it would be necessary to consider a diluting effect, an effect on properties of a cured product, a safety, an economic feasibility or the like. There are not many cases where a non-reactive diluent or a reactive diluent is used alone, and there is little case where the non-reactive diluent and reactive diluent are mixed together. Generally, 2~3 types of reactive diluents are used together.

### 2-2. Resin-type adhesive

Meanwhile, according to the present invention, as a high-frequency heat bonding adhesive, it is possible to mention the following resin-type heat-reactive adhesives in addition to synthetic heat-reactive adhesives:
- Heat curing adhesives: a urea-type adhesive, a melamine-type adhesive, a phenol-type adhesive, an unsaturated polyester-type adhesive, an epoxy-type adhesive, a resorcinol-type adhesive;
- Thermoplastic adhesives: a polyvinyl acetate-type adhesive, a polyvinyl alcohol-type adhesive, a vinyl chloride-type adhesive, a polyvinyl acetal-type adhesive, an acryl-type adhesive, a saturated polyester-type adhesive, a polyamide-type adhesive, a polyethylene-type adhesive;
- Rubber-styrene type adhesives: a butadiene rubber-type adhesive, a nitrile rubber-type adhesive, a butyl rubber-type adhesive, a silicone rubber-type adhesive, chloroprene.

As adhesives for a high-frequency heat bonding, mention can be made of mixed adhesives as follows:
- Mixed-phenol type: a vinylic phenol-chloroprene rubber type;
- Epoxy type: a polyamide type, a nitrile rubber-epoxy type.

According to a preferable embodiment of the present invention, as an adhesive of the present invention, it is possible to use a heat curing adhesive and mention can be made of an adhesive made of a vinyl acetate type resin, a nitro cellulose type resin, an epoxy type resin and a phenol type resin, preferably of an adhesives made of an epoxy-type resin and a phenol-type resin.

According to another preferable embodiment of the present invention, as an adhesive of the present invention, it is possible to use SGA (a second generation adhesive) which is a generic term for a reactive-acryl type adhesive. It is possible for it to exhibit good adhesion having an excellent heat resistance, a chemical resistance and the like, by a graft polymerization of the elastic body and acryl monomer in the mixed composition during the curing reaction.

According to the present invention, it may be preferable to use a rapid reactive adhesive which can exert adhesiveness immediately.

### 3. Printing of adhesives

According to the present invention, the liquid adhesive or adhesive composition can be printed or coated on a fabric by a general printing technology such as a stamping printing technology, a pressing press printing technology, a roller printing technology or a screen printing technology. In the printing or dyeing field, minute or micro patterns can be formed with 2 ∼ 4 colors. A printing or dyeing technology can be applied to the present invention without any difficulty, treating the liquid adhesive like a sort of ink.

There is no particular restriction in the printing pattern to be formed or carved on the stamp, press, roller and screen. The pattern can preferably be a pattern wherein a straight line, a curved line, a broken line (---), a tilde or wave line (∼∼∼) or a zigzag line is formed in at least one line, specifically one or two lines. In case that a printing pattern is formed with two or more lines, it would be preferable for the entire width of the pattern not to exceed the maximum width of the printing pattern of the adhesive liquid mentioned below.

When applying the adhesive liquid to the fabrics, the adhesive liquid is applied or printed on the surfaces of the inner fabric and outer fabric facing and contacting each other (hereinafter, "inner surface"). For example, the adhesive liquid is coated or printed on the inner surface of the inner fabric or on the inner surface of the outer fabric, or on both of them.

Generally, in case of using functional fabrics as an outer fabric, the adhesive liquid may be printed only on the inner surface of an inner fabric (or down back) without printing on the inner surface of the functional fabric that is an outer fabric. Also, when a common down-proof fabric is used for both of the outer fabric and inner fabric (or down back), the adhesive liquid may be printed on both of the inner surfaces of the inner fabric and outer fabric.

The width of a printing pattern may be narrowed to 0.5 mm at the smallest, but from the point of view of the adhesiveness strength of an adhering line and the process efficiency (cost/performance), the width can be selected from at least 1 mm, preferably at least 2 mm, and specially at least 3 mm. The upper limit of the range of pattern width is not important for a printing pattern, but when considering the purpose of the present invention to form a seamless combining line with a combination of an inner bonding line and a surface pattern line, the upper limit can be selected from 20 mm or less, preferably 10 mm or less, and specially 8 mm or less. The width of a printing pattern can be efficiently selected from the range of 3∼8 mm. The width of the printing pattern even exceeding 20 mm can be applied to the present invention without causing any big problems.

### 4. Reinforced material and adhesive-fixed reinforced material

According to the present invention, a reinforced material can be additionally included between the inner fabric and the outer fabric.

For example, it is possible to manufacture a seamless combining line composed of an inner bonding line formed by together combining an inner fabric, a reinforced material and an outer fabric between the inner fabric and the outer fabric and a surface pattern line formed on the outer surface of the outer fabric, and characterized in that:
- said inner bonding line is formed by bonding the inner fabric-reinforced material-outer fabric together on the inner surfaces of the inner fabric and the outer fabric by fixing a heat-reactive adhesive on the inner surface of the inner or outer fabrics in a predetermined printing pattern, laminating the inner fabric-reinforced material-outer fabric, curing said fixed adhesive with a high-frequency heating and thereby bonding said inner fabric-reinforced material-outer fabric with the cured adhesive, and
- said surface pattern line is formed on the surface of the outer fabric by pressing said inner fabric-reinforced material- outer fabric together in a predetermined pressing pattern under the high-frequency heating to cause a difference in surface texture from the non-pressed area.

The above reinforced material-containing bonding pattern line can be formed by a method comprising:
(1) a preparing step of preparing an inner fabric, a reinforced material, and an outer fabric,
(2) a printing step of printing a heat-reactive liquid adhesive in a predetermined printing pattern on the inner surface of the inner fabric, on the reinforced material, or on the inner surface of the outer fabric,
(3) a drying step of drying the liquid adhesive printed on the inner surface of the inner fabric, on the reinforced material, or on the inner surface of the outer fabric,
(4) a laminating step of laminating the inner fabric, the reinforced material, and the outer fabric, and
(5) a high-frequency bonding step of high-frequency heating and simultaneously pressing the laminated inner fabric-reinforced material-outer fabric in a pressing pattern which is the same pattern as said printing pattern to form the bonding pattern line.

The reinforced material above can have a permeability (liquid permeability) such that a liquid adhesive at a printing step and/or a liquefied adhesive at a high-frequency heating step can pass through the reinforced material, such permeability can be achieved by suitably selecting the properties (e.g., wettability) of the reinforced material and the interval between strands (mesh size). For such reasons, it can be preferable to employ a mesh-type reinforced material that has a larger net size than a common fabric or nonwoven fabric.

The mesh-type reinforced material generally can have a mesh thickness of generally 0.01∼2mm, preferably 0.1∼1mm, more preferably 0.2∼0.5mm and a mesh size of generally 0.1∼5mm, preferably 0.2∼2mm, more preferably 0.5∼1mm. As long as a reinforced material is adequately liquid permeable to the adhesive used, the mesh thickness and mesh size may not be restricted to the above range.

The reinforced material above can have preferably a small change or no change in shape during a high-frequency bonding step, and can be made, for example, with a thermosetting synthetic fiber.

In a case where a reinforced material is employed, the liquid adhesive above can be printed only on an inner fabric and/or an outer fabric, or only on the reinforced material, or on both of the fabric and reinforced material.

When an adhesive is applied only to fabrics, a liquid adhesive is applied and dried on the inner surface of an inner fabric and/or the outer surface of an outer fabric in a predetermined pattern, a reinforced material can be simply inserted between, and laminated with, the inner fabric and the outer fabric to perform a high-frequency bonding under a pressing, and thereby to form a reinforced material-containing bonding pattern line.

When an adhesive is applied only to a reinforced material, a liquid adhesive is not applied to an inner fabric and an outer fabric, but is applied and dried on any one or both surfaces of the reinforced material in a predetermined pattern, the resulted adhesive-fixed mesh material can be simply inserted between, and laminated with, an inner fabric and an outer fabric to perform a high-frequency bonding, and thereby, a mesh-reinforced bonding pattern line can be formed. In a case where the reinforced material has a good liquid permeability, the adhesive can be applied to only one surface of the reinforced material. In a case where the reinforced material has a poor liquid permeability, the adhesive can be symmetrically applied to both surfaces of the reinforced material.

In general, a mesh material that constitutes a mesh-type reinforced material can play a role of helping sustain and maintain the shape of the fixed adhesive at the adhesive-fixed mesh-type reinforced material as well as a role of preventing a liquefied adhesive from spreading out during a high-frequency bonding, and thereby, the mesh material can improve the adhesiveness, durability and finishing quality of a pattern boding line. Whereas, since hot melt adhesives are prepared by solidifying or shaping solid adhesives, there has not been proposed a case that any reinforced material is contained in the hot melt. Therefore, a hot melt that is commonly employed is different in constitution from the adhesive-fixed reinforced material of the present invention, and does not exhibit any advantageous action and effect owing to the reinforced material (mesh).

The mesh-type reinforced material, preferably a mesh material uses a mesh fabric as a mesh material to print and dry an adhesive in suitable interval and thereby manufacture an adhesive-fixed mesh material, and it can be cut in a suitable width for use. Alternatively, the mesh fabric can be cut in a suitable size (width) and shape, and by printing and drying an adhesive hereto and thereby manufacturing an adhesive-fixed mesh material, and insert it between the inner fabric and the outer fabric for use.

Thanks to the mesh material reinforced between fabrics, a reinforced material-containing bonding pattern line has not only more excellent adhesive strength and durability, but also they do not damage or rather can improve the clearness and finishing quality of the bonding pattern line.

In the present invention, a reinforced material can be selected from common woven fabrics or non-woven fabrics if it has a sufficient liquid permeability and shape variability. In such case, it is preferable for the woven fabrics or non-woven fabrics to have a relatively large space between the strands, for example a pore size (a distance between a strand and a strand) of 0.1∼3mm.

### 5. Drying of adhesive

According to the present invention, when a bonding pattern line is formed by a high-frequency bonding, a process of drying an adhesive liquid may be important or critical. The drying of the adhesive liquid printed on a mesh fabric as an inner fabric, an outer fabric and/or a reinforced material is necessary because it stops the adhesive liquid from oozing out or getting stained or transferred onto others when the fabrics overlap each other or get contacted and rubbed against each other during the laminating process.

Further, when the fluidity of an adhesive liquid melted during a high frequency heating is too high, the adhesion power may be insufficient or the finishing of the adhering line may be poor. Thus, it is necessary to dry an adhesive liquid to a suitable level. Specifically, when a dried adhesive liquid is melted and cured at a high temperature while pressed with a high-frequency heat roller or press, a low dryness level of the adhesive liquid may make the fluidity of the adhesive liquid too high, and as a result, the adhesive liquid may excessively spread out or be squeezed outside, which may result in an insufficient amount of adhesive liquid for forming the bonding line. In addition, the adhesive liquid which spreads out too far away from the range of the high frequency heating may not proceed with the curing reaction during a high frequency bonding, and will cause the down feather to get lumpy in the compartments, causing its curing to proceed slowly when the down product is in use so as to get the down tangled up.

According to the present invention, the dryness level of an adhesive liquid attached or printed onto a fabric is not critical. Drying may be performed to an extent that the adhesive liquid does not flow out while delivering the fabric, and does not ooze out while laminating the fabrics, or to an extent that some adhesive liquid is not stuck on your finger after you have softly rubbed it with your finger.

There is no particular restriction in a drying temperature and a drying time, and they can be properly selected according to the type and concentration of an adhesive liquid and a solvent. For example, the temperature can be selected from the range of 50∼250 °C, particularly 70∼200 °C, and preferably 100∼150 °C, and the drying time can be selected from the range of 1 ∼ 60 min, particularly 1∼40 min, and preferably 2∼20 min. Preferably, drying can be performed by using warm air or hot air having the above temperature, or with a tenter dryer.

The thickness of the adhesive (excluding the adhesive permeated into the fabric) attached or printed on the fabric after drying is 1 mm or less, preferably 0.5 mm or less, and more preferably 0.3 mm or less. If the thickness of the adhesive gets too thick, the remaining adhesive liquid may flow over or spread over the pattern line and deteriorate the finishing quality during a high frequency heat pressing, or the thickness of the pattern line may become too thick, so that the compartment surface may not become flush with the pattern line.

According to another preferable embodiment of the present invention, the process for drying the adhesive liquid may be performed until the viscosity of the bonded adhesive liquid is at least 100 mPa.s, particularly at least 500 mPa.s, and preferably at least 1000 mPa.s, although it can vary depending on the viscosity of the adhesive. In an attached adhesive liquid, the solvent on or near the surface can be removed more quickly than the solvent in the inside. Therefore, when a semi-solid film is formed on the surface, it is possible to conclude that the adhesive liquid is dried to an extent that it does not ooze out when the fabrics are rubbed together. Thus, the viscosity may refer to the viscosity of the surface of the attached adhesive liquid, and preferably may refer to the average viscosity of the attached adhesive liquid.

### 6. Laminating of fabrics

In the present invention, "lamination" of fabrics means simply stacking or overlapping an inner fabric, an optional reinforced material and an outer fabric one on another, but excludes a chemical or physical combining. This is different from the general meaning of lamination that two or more fabrics are adhered or combined by methods such as bonding, laminating or the like. In the present invention, when an inner fabric, an optional reinforced material and an outer fabric are stacked and then a part of them is combined by a bonding line, this is referred to as the term "double fabric," and when the fabrics are not combined but simply stacked one on top of another, it is referred to as "laminated fabric."

Thus, the lamination of fabrics refers to a state where an inner fabric, an optional reinforced material and an outer fabric are stacked together to be in close contact, but the inner fabric, an optional reinforced material and outer fabric are still not combined physically or chemically. In general, the lamination of fabrics can be performed by placing an outer fabric on an inner fabric. In case of using a reinforced material, the reinforced material is inserted between the inner fabric and the outer fabric for lamination.

In the laminating step of fabrics according to the present invention, it is necessary to bring an inner fabric in close contact with an optional reinforced material and an outer fabric and simultaneously to make the printing pattern of the adhesive liquid of the inner surface of the inner fabric coincide with the printing pattern of the adhesive liquid of the outer fabric. It is sufficient to simply insert an adhesive-fixed reinforced material between the inner fabric and the outer fabric, but where the inner fabric and the outer fabric have the intended bonding lines, they are laminated such that the adhesive liquid printing pattern of the reinforced member and the intended bonding lines of the inner fabric and the outer fabric coincide with each other.

The laminating step can be performed mechanically or by hand controlling the moving speed of the fabrics or the roller rotating speed in consideration of swelling degree, tension or the like of the inner fabric and outer fabric. Occasionally, the moving speed of the fabric, the pattern location or the like can be measured and controlled using a laser measurer or the like.

Meanwhile, in a common sewing process, an inner fabric material and an outer fabric material are each separately cut to prepare inner fabric pieces and outer fabric pieces. The resulting inner fabric pieces are respectively laminated and combined with the corresponding outer fabric pieces. Therefore, the laminating process and the combining (sewing) process require manual work and thus are difficult to be mechanized, which also makes it difficult to achieve a mass production. Whereas, in the present invention wherein an adhesive liquid is printed with a printing technology and then a bonding pattern line is formed with a high-frequency bonding, it is easy to mechanize all the processes including the adhesive printing process, the drying process, the laminating process and the subsequent processes, which can make it possible to achieve a mass production of clothing products or bedding products.

According to the present invention, the adhesive liquid is coated or printed by applying a printing process. Such printing process can also be applied in order to make the patterns of the adhesive coincide with each other in the laminating process of fabrics.

### 7. High frequency bonding

### (1) High-frequency heating

Ultrasonic-frequency or high-frequency heating is largely divided into an induction heating and a dielectric heating depending on the physical property of the materials to be heated. The former is mainly used for heating conductive metals, and the latter is mainly used for heating materials with dielectric loss such as water, paper, plastic, etc.

The high frequency heating method of the present invention is not particularly restricted and can be selected from an induction heating using a high frequency of 3kHz∼800kHz, particularly 7kHz∼400kHz, or a dielectric frequency of 2MHz∼100MHz, particularly 5MHz∼50MHz. The high-frequency heating time may vary depending on the type and thickness of a fabric, the type of adhesive or the like, and can be selected from a range of 1∼30 sec, specifically 2∼20 sec, but is not limited thereto.

For example, a thin fabric which is not subjected to any coating treatment can be heated by irradiating a high frequency of about 15 kHz for 4∼5 sec, a coated fabric can be heated by irradiating a high frequency of 30∼40 kHz for 6∼8 sec, and a thick fabric subjected to a film treatment or a laminating treatment can be heated by irradiating a high frequency of 60∼80 kHz for about 10∼12 sec, but these do not restrict the present invention.

Generally, the advantages of a high-frequency heating can include: 1) economic feasibility due to a direct heating of the object to be heated; 2) guarantee of a high quality due to a local heating and a selective heating; 3) possibility of mass production due to a quick processing in matter of seconds; and 4) prevention of pollution or damage due to a noncontact heating. In addition to the above advantages, mention can be made of other advantages such as material saving, non-pollution, improved operation efficiency, an efficient installation area.

### (2) Pressing

According to the present invention, a bonding pattern line is formed by heating with a high-frequency the laminated inner fabric, optional reinforced material and outer fabric, curing the adhesive, and simultaneously pressing it to bond or integrate the inner fabric-adhesive-outer fabric or the inner fabric-adhesive-reinforced material-adhesive-outer fabric. The inner fabric and outer fabric are laminated so that the intended bonding lines thereof coincide with each other and/or the patterns of the adhesive liquid printed thereon coincide with each other. Preferably, a high frequency heating and pressing is carried out by using a high frequency heating roller or press having a pressing tip with the same pattern as the printing pattern of the adhesive liquid. Specifically, it is preferable that the concave pattern (i.e., printing pattern) carved in the printing roller for fabrics or the printing roller for a reinforced material is substantially the same as the convex pattern (i.e., pressing pattern) formed on the high-frequency heating roller. Here, the expression that the patterns are the same can mean that not only the pattern shapes are the same but also the pattern widths are the same.

According to another embodiment of the present invention, the width of the pressing pattern of the pressing tip is substantially the same as the width of the intended bonding line or the width of the printing pattern of the adhesive. For example, the width difference or the shape disparity is within 20%, particularly within 10%, preferably within 5%, and more preferably within 1%. It is better for the pressing pattern to be smaller than the printing pattern.

In the present invention, after stacking an inner fabric (or down back) attached with an adhesive liquid by the printing technology on an outer fabric which is a breathable coating fabric, a pattern of a designated shape is formed by using a high frequency heating roller or press. The pattern of the pressing tip (i.e., the pressing pattern) which is protruded from the high frequency heating roller or press may be the same as or similar to the printing pattern carved on the main roller or screen used during the printing process of adhesive liquid. Like a breathable coating fabric, there are fabrics that cannot be fused using a high frequency heating. However, the present invention has an advantage that it is possible for the method to be applied even to these fabrics, since the present invention is practiced by carrying out a high-frequency bonding and using an adhesive.

### (3) High frequency bonding

In the high frequency bonding step (5), the pressing and high frequency heating are applied along the pressing pattern of the pressing tip of the roller or press for a high frequency bonding. Thus, the fabrics are heated and pressed along the pressing pattern, and thus the surface texture changes, and accordingly a pattern line is formed. However, the adhesive is heated with the high-frequency irradiation ray or a high-frequency heating ray projected along the pressing pattern to proceed with a curing reaction, and thereby to form a bonding line. As a result, a pattern line is formed by a change in surface texture occurring along the pressing pattern, and an adhering line is formed by the adhesive which has proceeded with a curing reaction along the pressing pattern. At this time, if the pressing pattern does not coincide with the printing pattern, in other words, if the pressing pattern and printing pattern are not the same, or if they were not coincided with each other during a laminating process even though they are the same, the adhesives present at locations different from the pressing pattern may not proceed with a curing reaction, and thus an adhering line may not be formed along the overall printing pattern, and may be formed only at portions overlapping or coinciding with the pressing pattern.

According to the present invention, the printing pattern and the pressing pattern are substantially the same. Also, since the pressing pattern of the pressing tip would coincide with the printing pattern of the adhesive in the laminating step (4), substantially all adhesives attached along the printing pattern would stay within the range of a high-frequency irradiation range or a high-frequency heating range. Thus, substantially all adhesives attached along the printing pattern will be heated with a high-frequency to proceed with a curing reaction.

As such, by a high-frequency heating and pressing, the heat-reactive adhesive proceeds with a curing reaction to bond fabrics and thereby to form a bonding line, and the fabric surface is heated and pressed to generate a difference in surface texture and thereby to form a pattern line. The pattern line formed as above is clear and has an excellent finishing quality.

Further, since the fabric is generally very thin, a liquid adhesive attached to the inner surface of an outer fabric can ooze out or permeate to the outer surface of the outer fabric while heated and pressed, although it depends on the constitution and density of the fabric. The portion formed by curing the adhesive which has been oozed out or permeated to or near the surface of the outer fabric has a surface texture different from that of the fabric. Thus, the pattern line may appear clearer.

As one of the features of the present invention, use of a reinforced material improves the spreadability of the fabric upon bonding of the fabric with much thinner thickness and prevents the wrinkle formation on the surfaces of the fabric.

According to a preferable embodiment of the present invention, a high frequency bonding can be carried out under the conditions that the pressing pattern of the pressing tip or the protrusion is configured to be substantially the same as the printing pattern of an adhesive, and that the printing pattern of the adhesive and the pressing pattern of the pressing tip are adjusted to be coincided with each other and then pressed with a high-frequency heating. If the high-frequency bonding is carried out under a condition where the printing pattern does not coincide with the pressing pattern, the position of the resulting bonding line will not coincide with the position of the resulting pattern line, and as a result, the inner bonding line is not properly formed, thus decreasing the adhesive power. When the inner bonding line does not coincide with the surface pattern line, their uniformity deteriorates. As a result, the capability of an inner adhering line to maintain the shape and surface texture of a surface pattern line may deteriorate, and over time, the shape of the pattern line can be disfigured and its surface texture crumbled, blurring the pattern line.

The width of an inner bonding line depends on the width and/or amount of adhesive, whereas the width of a surface pattern line depends on the width of the pressing pattern carved on the heating tip of a roller or press for a high-frequency heating. Thus, the uniformity and consistency between the printing pattern and the pressing pattern will become more important.

Meanwhile, in a case where fabrics are combined by a sewing manner, the sewing line actually combines an inner fabric and an outer fabric at the inside of the fabrics. Therefore, the sewing line can be considered as a combining line as well as a pattern line since it is visible to the naked eye on the surface of the fabric (outer fabric).

In addition, in a case where fabrics are bonded by a simple hot-pressing using a heat-melting adhesive such as a hot melt, a bonding line is formed between the fabrics, but a pattern line is not formed on the fabric surface. Even if the pattern line is formed, it is not clear and the finishing is poor. The first reason is that the possibility to form a permanent difference in surface texture is low since the bonding process is generally carried out at a relatively low temperature where the hot melt can melt. The second reason is that no difference in surface texture of a fabric is generated since the roller or press generally employed in such process does not have any pressing tip which can selectively press only the part where the hot melt is attached. In addition, the durability of the bonding line formed is low since a heat-melting adhesive such as a hot melt has a low adhesive durability. Accordingly, even if a bonding line and a pattern line are formed, their durability will be low and thus it is highly likely that the clarity of the pattern line will severely deteriorate over time.

Meanwhile, even in a hot-pressing using a heat-melting adhesive such as a hot melt, the melted hot melt may permeate into the fabric and exude to or near to the surface of the outer fabric, which may generate a structure deformation or a surface texture change to form a pattern along the hot melt bonding line. However, since thus formed bonding line is low in the adhesion power and the durability, it is highly likely for the pattern line to get vague and separated from the bonding line over time.

Even where the fabrics are bonded by a simple hot-pressing method using a heat curing adhesive instead of a hot melt adhesive, if a roller or press is used without a pressing tip for selective pressing it is difficult to selectively generate a difference in surface texture on the fabric surface, and thus it is difficult to obtain a clear pattern line. In addition, in a case where the fabrics are subjected to a hot-pressing at a high temperature by a general heating method, not by a high-frequency heating method, it is very difficult to control the temperature so that only a difference in surface texture can be generated without damaging the fabric surface.

Meanwhile, a high-frequency bonding process using an adhesive has been already well known in the field of the adhesion of plastic, paper, rubber, or the like. However, a method which comprises printing the adhesive liquid in a printing manner, pre-drying the printed adhesive liquid, and coinciding the printing pattern with a pressing pattern, i.e., pressing along the printing pattern and simultaneously performing a high-frequency bonding has not been known. Further, there has not been found any prior art that discloses a high-frequency bonding after coating an adhesive liquid on both surfaces to be bonded and drying it, and coinciding these patterns with each other. Further, in the conventional high-frequency bonding of plastic, paper, rubber, etc., it has hardly been known to pattern the bonding line and to utilize thus formed pattern in an aesthetical way.

### (4) High-frequency heating and pressing

According to the present invention, the fabrics that the adhesive is applied, dried and laminated or the fabrics in which an adhesive-fixed reinforced material are high-frequency heating under pressing to high-frequency bonding thereby form the bonding pattern lines, and thereby the fabrics are combined in a seamless manner. Since the adhesive is thermosetting, the fabrics form the bonding pattern lines in a pressed state at the high-frequency heating stage. Accordingly, the fabrics with the adhesive permeated in are not recovered to the original state (the original thickness), but form bonding pattern lines in the state, that is, the pressed state. The bonding pattern lines thereby have fabric thickness thinner than the fabrics around, giving a concave three-dimensional effects as a whole.

According to the present invention, the thickness of the resulted bonding pattern lines may be reduced based on the thickness of the fabric which is originally not compressed, by 5% or more, specifically 5 to 60%, preferably 5 to 50%, more preferably 10 to 40%. In case of inserting a reinforced material such as a mesh between the fabrics, the thickness reduction ratio is calculated including the thickness of the reinforced material.

### 8. Seamless combining line

Generally, the seamless combining method for fabrics can be largely divided into (1) a fabric preparing step of preparing fabrics, (2) a printing step of preparing and printing an adhesive, (3) a drying step of drying the adhesive, (4) a laminating step of laminating the fabrics, (5) a high frequency bonding step, (6) a marking and cutting step, (7) subsequent steps including an overlock finishing, down introducing and down inlet closing, and (8) an assembling step of the clothes pieces and a finishing step of the assembled parts.

The seamless combining method for fabrics according to the present invention can be performed in accordance with the steps below:
(1) a preparing step of preparing an inner fabric and an outer fabric,
(2) a printing step of printing a heat-reactive liquid adhesive in a predetermined printing pattern on the inner surface of the inner fabric, and/or on the inner surface of the outer fabric, on one or both surfaces of the optional reinforced material,
(3) a drying step of drying the liquid adhesive printed on the fabrics or the optional reinforced material,
(4) a laminating step of laminating the inner fabric, the reinforced material, and the outer fabric, and
(5) a high-frequency bonding step of high-frequency heating and simultaneously pressing the laminated inner fabric, the optional reinforced material and the outer fabric in a pressing pattern which is the same pattern as said printing pattern to form the bonding pattern line.

The seamless combining line according to the present invention formed by the method above is a bonding pattern line which is composed of an inner bonding line formed between the inner fabric and the outer fabric and a surface pattern line formed on the surface of the outer fabric. The seamless combining line can have the following characteristics:
- said inner bonding line is formed inside between the inner fabric and the outer fabric by fixing a heat-reactive adhesive on the surface of the inner or outer fabric in a predetermined printing pattern, high-frequency heating and curing said fixed adhesive, and thus combining said fabrics with the reacted and cured adhesive,
- said surface pattern line is formed on the surface of the outer fabric by pressing said inner fabric and outer fabric together in a predetermined pressing pattern under a high-frequency heating to cause a difference in surface texture,
- the inner bonding line from said printing pattern and the surface pattern line from said pressing pattern are the same in pattern (shape) and have a width difference of 10% or less, and
- said surface pattern line is substantially unified with the inner bonding line by the adhesive oozed onto or near to the surface of the outer fabric and then cured.

In the context of the present invention, where the bonding pattern line is composed of an inner bonding line and a surface pattern line, the expression, that "the surface pattern line is unified with the inner bonding line," means that the surface pattern line formed in the present invention comprehensively reflects a change in surface texture which is caused from the changes in the surface formation and surface structure of the fabric generated by a high frequency heating and pressing of the fabric as well as a change in surface texture which results from the change in the inner formation and inner structure of the fabric generated due to an adhesive which has oozed out to the surface of the fabric or its vicinity and then cured. The unification of the surface pattern line and inner bonding line can be further improved when the fabric has a higher ability to absorb a liquid adhesive and/or the adhesive liquid has a higher ability to penetrate into the fabric.

Meanwhile, as to the method of forming a bonding pattern line (that is, a bonding line and a pattern line) to high quality and high efficiency by high-frequency bonding technique, the detailed description for printing step, drying step, laminating step and high-frequency bonding step, and the importance thereof are sufficiently described in the Korean Patent Application No. 10-2014-0132528 (corresponding to PCT/KR2015/006776) and the Korean Patent Application No. 10-2014-0132529 (corresponding to PCT/KR2015/006779).

Hereinafter, the present invention will be explained in more detail with reference to the drawings.

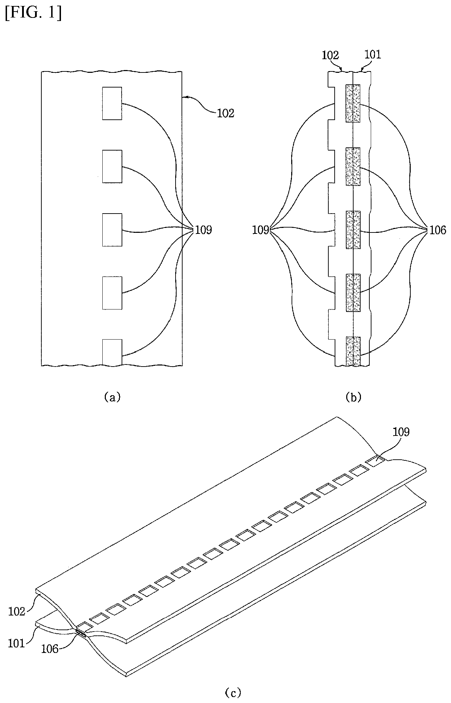

FIG. 1 is a drawing illustrating the fabrics combined by the bonding pattern lines of dotted line pattern, the combining manner and the structure of the same in a diagram. Drawing (a) shows a surface pattern line of dotted shape formed on the surface of the outer fabric (102), and a series of patterns (109) forming them, and Drawing (b) shows that the inside where the dotted pattern (109) is formed, fabrics are bonded forming internal adhesive line by a cured adhesive (106), and Drawing (c) is an oblique view shown the overall combining structure of the fabrics combined by the bonding pattern line consisting of the surface pattern line and the internal bonding line.

As explained above, since the adhesive is cured in the state which the inner fabric and the outer fabric are pressed in the high-frequency bonding step, the fabrics are thinner in thickness than other parts that are not compressed in the part of the pattern (109) forming the surface pattern line. The thickness reduction ratio can be selected based on the thickness of the fabric which is originally not compressed, from but not limited to about 5% or more, specifically 5 to 60%, preferably 10 to 50%, more preferably 15 to 40%. The thickness reduction ratio or the fabric compression ratio is the ratio which does not include the reinforced material.

Meanwhile, as illustrated in Drawing (b), the pattern line or the pattern (109) forming the pattern line, has a carved form or concave portion which is relatively clear on the outer fabric surface pressed by the roller or the press for pressing having a protruded portion or a pressing tip, and moreover, a portion which is concave to a degree can be formed on the inner fabric surface pressed by a simple support (159) without a protruded portion or a pressing tip.

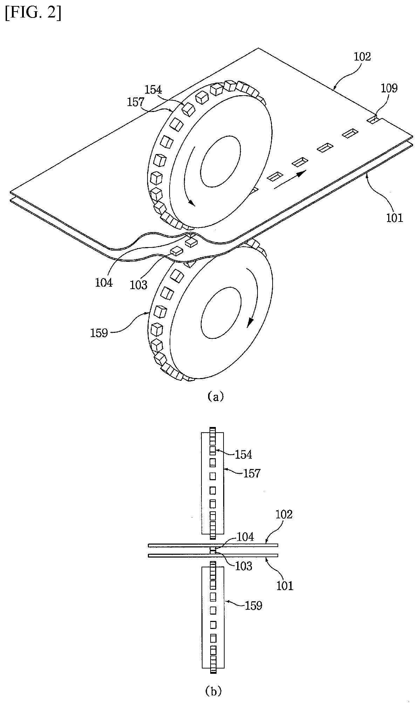

FIG. 2 is a drawing illustrating the process that adhesive-fixed fabrics are high-frequency bonded by a wheel-type pressing roller to form bonding pattern line of dotted pattern in a diagram.

Drawing (a) of FIG. 2 is an oblique view describing the process wherein an outer fabric (102) and an inner fabric (101) which adhesives (103 and 104) are attached are positioned between a wheel-type pressing roller (157) and a roller-type support (159), and then high-frequency bonding is carried out to form a pattern line pattern (109) of dotted form on the surface of the outer fabric (102). Each of the two rollers (157 and 159) is configured to rotate in the indicated rotational direction, and the fabrics (101 and 102) are to proceed towards the direction of the arrow mark. When pressed, high-frequency heated and cured by the protrusions (154 and 159) formed in a pressing pattern of dotted form, the adhesives (103 and 104) attached to the inner fabric (101) and the outer fabric (102), inner bonding line is formed inside the fabric and patterns (109) forming a surface pattern line can be continuously formed on the surface of the outer fabric.

Drawing (b) of FIG. 2 is a front view corresponding to the oblique view of Drawing (a), and shows a wheel-type pressing roller (154) wherein a pressing pattern (154) of dotted form is protruded, a roller-type support (159) wherein a corresponding pressing pattern is protruded and the inner fabric (101) and the outer fabric (102) positioned between them in order. It can be understood that the adhesives (103 and 104) are applied to each of the inner fabric (101) and the outer fabric (102) and dried.

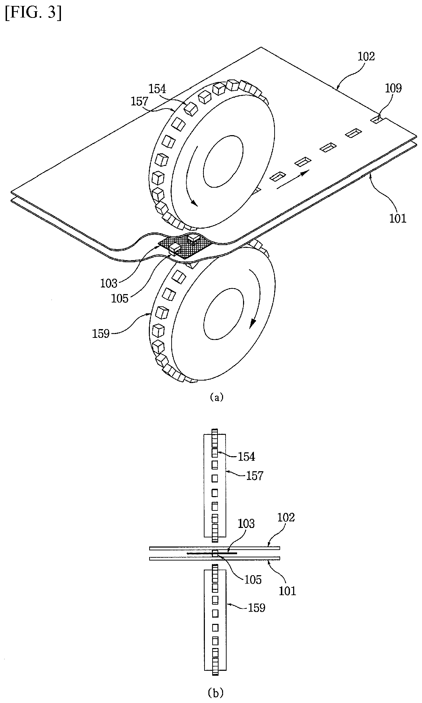

FIG. 3 is a drawing illustrating the process that fabrics wherein adhesive-fixed reinforced material is inserted are high-frequency bonded by a wheel-type pressing roller to form bonding pattern line of dotted line pattern in a diagram. Except that the adhesives are not attached to the fabric but are used in the form of an adhesive-fixed reinforced material, this is similar to FIG. 2.

Drawing (a) of FIG. 3 shows that the reinforced material (105) wherein the adhesive (105) is attached is inserted between the inner fabric (101) and the outer fabric (102) and supplied between the wheel-type pressing roller (157) and the roller-type support (159), and Drawing (b) is a front view corresponding to the oblique view of Drawing (a).

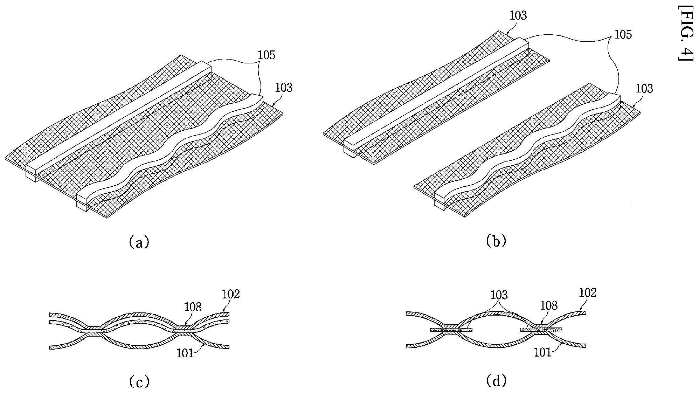

FIG. 4 is a drawing illustrating the structure of a bonding pattern line formed by inserting a reinforced material (103); the drawings (a) and (c) illustrate an adhesive-fixed reinforced material (103) which is continuously inserted and a sectional structure of the bonding pattern line (108) comprising the same; and the drawings (b) and (d) illustrate an adhesive-fixed reinforced material (103) which is discontinuously inserted and a sectional structure of the bonding pattern line comprising the same.

Meanwhile, in the present invention, the drying of an adhesive liquid can be very important in forming bonding pattern lines (i.e., bonding lines and pattern lines) in high quality and high efficiency by a high-frequency bonding method. The drying of an adhesive liquid printed on the fabric or the reinforced material is important not only because it prevents adhesive liquid from being transferred or remaining sticky and getting stuck onto something else when the fabrics are stacked or rubbed together during a laminating process, but also because it allows the bonding pattern line to be formed in high quality. This is because too high fluidity of the adhesive liquid melted during a high frequency bonding may lead to insufficient adhesiveness or a poor finishing at the resulting bonding lines. The dried adhesive liquid can be melted at a high temperature generated by a high frequency heating. When the melted adhesive liquid is pressed by a high frequency heating roller or press, the melted adhesive liquid having too high fluidity may spread out to the sides too much and far, which makes the amount of the adhesive liquid for forming the bonding lines insufficient or lacking. Further, the adhesive liquid that spreads out too far out of the range of high-frequency heating may not be heated, and thereby, may not proceed with the reaction.

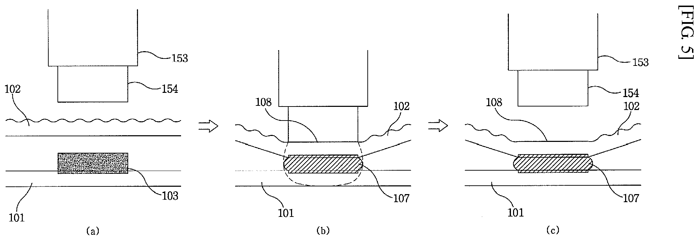

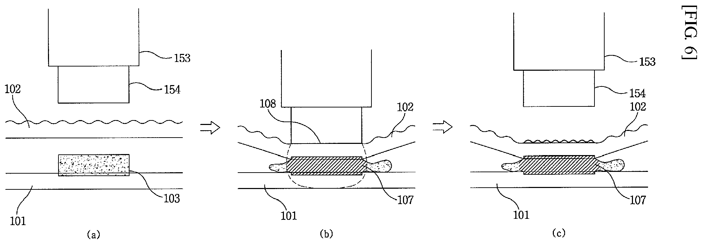

In the present invention, as illustrated in FIG. 5 and FIG. 6, the importance of drying can be understood by reviewing the behavior of an adhesive liquid and the relation between the resulting bonding line and the pattern line during a high-frequency heating and pressing.

FIG. 5 is a diagram that explains the behavior of a properly dried adhesive liquid during a high frequency bonding process and the shape and form of the resulting bonding pattern line. Drawing (a) represents a state before a high frequency bonding process, wherein the inner fabric (101) and the outer fabric (102) are laminated and the printing pattern of the adhesive liquid (103) printed on the inner fabric (101) is arranged to coincide with the pressing pattern of the pressing tip (154); Drawing (b) represent a state during the high frequency bonding process, wherein the pressing tip (154) presses the outer fabric (102) to form a pattern line (108), and the adhesive liquid is heated and subjected to a curing reaction to form a bonding line (107); and Drawing (c) represents a state after the completion of the high frequency bonding process, wherein the inner fabric (101) and the outer fabric (103) are combined by a bonding line (107) made from the adhesive, and a pattern line (108) is formed on the surface of the outer fabric (103). At this time, since the adhesive liquid was properly dried, the adhesive liquid did not flow over or spread out during the high frequency heating and pressing, and the curing reaction could proceed within the high frequency heating area. As a result, the quality (clearness, finishing) and properties (adhesion power, durability) of the bonding pattern line are excellent.

FIG. 6 is a diagram that explains the behavior of an adhesive liquid that is not properly dried or has high fluidity during a high frequency bonding process and the shape and form of the resulted bonding pattern line. Drawings (a), (b) and (c) in FIG. 6 correspond to Drawings (a), (b) and (c) in FIG. 5. Since the adhesive liquid (103) printed on the inner fabric (102) has a high fluidity during the high frequency bonding (Drawing (b)), it spreads out of the high frequency heating range indicated by dotted lines before a curing reaction is performed to form a bonding line (107). When an adhesive liquid that has spread out of the high frequency heating range is subjected to a curing reaction, it adheres to the fabric outside the intended bonding line and thereby it may make the finishing of the bonding line poor; and when the adhesive does not proceed to a curing reaction, it remains as an unreacted adhesive liquid (the parts represented by 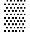 in 107) and thereby it may make the down within the compartment tangle later on.

According to a preferable embodiment of the present invention, it is preferable that the printing pattern of the adhesive liquid is substantially the same as the pressing pattern of the pressing tip in a high frequency heating roller or press, and the difference in width between them should be within 20%, particularly within 10%, and preferably within 5%. It may be preferable that the pressing pattern of a pressing tip is slightly smaller than the printing pattern of an adhesive liquid in order to form a clearer pattern line and more excellent finishing of the pattern line.

In the present invention, if the pressing pattern of a heating tip in a high-frequency heating roller or press is substantially the same in shape and size as the printing pattern of an adhesive liquid, or if the difference between them is within 5%, most of the adhesive can be included in the adhering line or bonding line, and thereby, the quality (clearness, finishing) and property (adhesiveness, durability) of the resulted bonding pattern line can be satisfied. By suitably selecting the dryness degree of the adhesive and the difference in size of the pressing pattern and the printing pattern, it is possible to reduce to the minimum the amount of non-reactive adhesive which has been flowed out or squeezed out during the heating and pressing and thus is not included in the bonding line.

If the pressing pattern of a pressing tip is too wider than that of the printing pattern of an adhesive liquid, most of the printed adhesive can be used for forming a bonding line, but the printed adhesive cannot cover all the width of the pressing pattern since the amount of the adhesive is relatively small when taking consideration of the width of the pressing pattern. Thus, the inner bonding line would be irregular or bumpy in its edges and have a poor finishing. In addition, since a surface pattern line that cannot be supported by the inner bonding line may be partially formed, the quality of the bonding pattern line would deteriorate as a whole.

If the pressing pattern of a pressing tip is too narrower than the printing pattern of an adhesive liquid, or if the printing pattern of an adhesive liquid is too wider than the printing pattern of a pressing tip, although the overall surface pattern line can be supported by the inner bonding line, the adhesive liquid, which is present outside the high-frequency heating range similarly to the pressing pattern, would not be heated sufficiently, and thus the ratio of non-reactive adhesive liquid would increase. Accordingly, all of the printed adhesive would not be used for forming a bonding line, which makes the above process economically inefficient, and which occasionally also results in insufficient adhesion. In addition, the non-reactive adhesive liquid may cause a tangling of down within a compartment, and it may have a curing reaction, albeit slowly, during a high-temperature washing or drying, and thus the finishing quality of the bonding pattern line can be affected unfavorably and thereby a product defect may be generated.

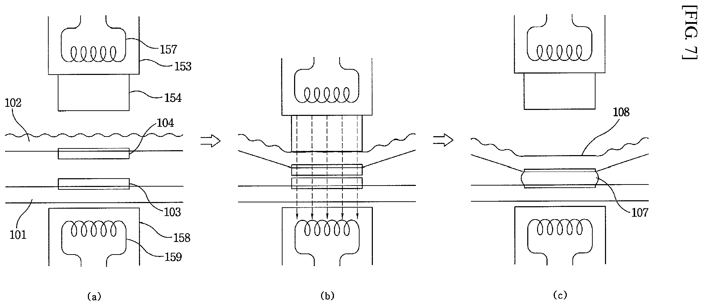

FIG. 7 explains a high-frequency bonding process of the present invention being performed in the dielectric heating manner.

As illustrated in Drawing (a), a high frequency circuit (157) and a high frequency circuit (159) are installed in the pressing press (153) and the support (158), respectively, and the protrusion (154) attached to the end of the pressing press (153) acts as a pressing tip.

As illustrated in Drawing (b), in the dielectric heating manner, the adhesives (103 and 104) located within the magnetic force lines of the above two high-frequency circuit coils (157 and 159) are selectively heated by a dielectric heating. In some cases, the fabric itself located within the magnetic force lines may be heated. The irradiating of a high-frequency and the pressing by the protrusion (154) of the pressing press (153) are simultaneously carried out on the same area of a fabric surface, and the formation of an inner bonding line by a curing reaction of an adhesive and the formation of a surface pattern line by a pressing with a pressing tip can be simultaneously made. On the other hand, the induction heating manner is not a method in which an adhesive is directly heated or an adhesive generates heat, but is a method in which the heat generated inside the induction circuit is delivered or conducted to the protrusion, and the heat at the protrusion is delivered or conducted to the adhesives in the inner surfaces of the fabrics to cause a curing reaction of the adhesives.

As illustrated in Drawing (c), when the adhesives (103 and 104) printed in a predetermined printing pattern are heated and pressed with a heating tip (154) having a pressing pattern that is the same pattern as the printing pattern so that they are coincided with each other, it is possible to obtain, at the same time and in the same pattern, a bonding line (107) having an excellent adhesiveness and a pattern line (108) having an excellent finishing quality, as in the high-frequency induction heating manner.

In the high-frequency dielectric heating method, it is necessary to properly select the frequency of the high frequency applied, irradiation time and power in consideration of the heating temperature of the desired adhesive and dielectric heating constant of the adhesive.

If a bonding process is carried out in the high frequency dielectric heating method in a state where the printing pattern and pressing pattern do not coincide with each other, the adhesive located outside the area of magnetic line of force is not heated and thus does not go through curing, or even if it goes through curing, it may not be pressed; then, due to the un-evenness of the bonding line within the fabric and inconsistency between the bonding line and pattern line, the pattern line finishing may be poor, and the inner fabric and outer fabric may not bond to each other at some portions of the pattern lines.

Meanwhile, in case of using a bonding means in the high frequency induction heating method, the protrusion acts as a pressing heating tip, and the adhesive is heated with the heat generated at the pressing heating tip and delivered through the fabric. The pressing heating tip heat-presses the fabric that has been laminated with the printing patterns coinciding with each other along a pressing pattern, and if the printing pattern and pressing pattern are the same and they are heat pressed in a state of coinciding with each other, a bonding line formed by an adhesive cured along the pressing pattern is formed on the inner surface of the fabric and a pattern line formed along a pressing pattern is formed on the fabric surface simultaneously in the same pattern. In this case, the bonding strength of the bonding line (i.e., compartment separation line) and the finishing quality of the pattern line are very excellent. In the high frequency induction heating method, it is necessary to properly control the temperature of the pressing heating tip and pressing time so that the temperature of the fabric surface does not get too high.

If a high frequency bonding is carried out in a state where the printing pattern and pressing pattern do not coincide with each other, the adhesive located outside the area of the heating pressing tip may not go through a curing reaction or even if it goes through the curing reaction, it may not be bonded. Thus, in the same manner as above, due to the un-evenness of the bonding line within the fabric and inconsistency between the bonding line and pattern line, the pattern line finishing may be poor, and the inner fabric and outer fabric may not bond to each other at some portions of the pattern lines.

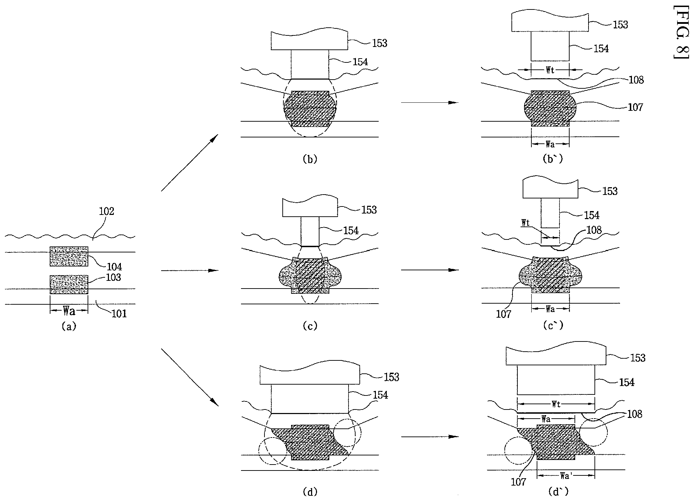

FIG. 8 is a diagram explaining the behavior and formation of a bonding line depending on the difference of the width (Wt) of the printing pattern of the pressing tip and the width (Wa) of the pressing pattern of the adhesive liquid, and problem thereof.

Drawing (a) in FIG. 8 illustrates a state where an inner fabric (101) printed with the adhesive liquid (103) and outer fabric (102) printed with the adhesive liquid (104) are laminated.

Drawing (b) in Fig. 8 shows the process of forming a bonding line (107) in case the widths of the pressing pattern and printing pattern are substantially the same (Wt=Wa). In this case, most of the adhesive comes within the range of high frequency heating (circular dotted line), and the bonding line (107) after curing is formed to almost coincide with the pattern line (108). The amount of adhesive spread outside a predetermined intended pattern line (i.e., width of pressing pattern) is minimized, and thus the resulting bonding line (107) is formed to have a uniform width and its finishing is excellent.

Drawing (c) in Fig. 8 shows the process of forming a bonding line (107) broader than the pattern line (108) in case the pressing pattern is narrower than the printing pattern (Wt < Wa), and problems generated in the process. The bonding line (107) after curing may be formed to be wider than the pattern line (108) and the pattern line may be formed to have excellent finishing. However, on the inner surface of the fabric, non-reactive adhesive liquid (the part outside the dotted line) may exist excessively. The resulting adhering line may have excellent finishing, but the non-reactive adhesive liquid increases the processing cost. Since the boundary line of the range of high frequency heating is not the boundary line of the reaction of adhesive, the boundary of the reacted adhesive and non-reacted adhesive is not clear. Thus, the boundary of the bonding line is unclear, and thus the finishing is poor. The non-reactive adhesive liquid left after heat pressing may go through a curing reaction during subsequent processes or during the use of down products. However, this may further combine nearby fabrics or make the nearby down tangle, thereby causing poor products.

Drawing (d) in FIG. 8 shows the process of forming a bonding line (107) narrower than the pattern line (108) in case the pressing pattern is wider than the printing pattern (Wt > Wa). In this case, after heat pressing, most of the adhesive liquid is cured, and thus there is little non-reactive adhesive liquid left. However, the edge or boundary of the bonding line is not smooth and may be uneven. Also, there is relatively less adhesive available than required considering the pattern width, and thus part of the surface pattern line may be supported by the non-adhesive area (the part indicated by dotted circle at the right lower end and left upper end of the adhering line). If the inner bonding line (107) and surface pattern line (108) are not unified as such, the finishing of the bonding pattern line is poor and the quality (adhesiveness and durability) deteriorates.

Meanwhile, as to the explanation for the differences between printing width of adhesive and pressing width of pressing tip in the attached FIGS. 5, 6 & 7, Prior art references suggest technologies bonding fabrics or adhering or forming a film on the fabric surface by coating or adhering an adhesive or hot melt on the fabric and heat pressing it with a roller or press. However, this is the same as the case where the pressing pattern is wider than the printing pattern (Wt > Wa) in Drawing (d) in FIG. 8. Thus, the same or similar problems may be raised.

In conclusion, it is preferable that the pressing pattern and printing pattern have a similar shape and are substantially the same in size. The pressing pattern and printing pattern are actually formed in a pressing pattern embossed on the pressing means and in a printing pattern carved in the printing device. Thus, the pressing pattern of the pressing means (e.g., pressing tip of the pressing roller) and printing pattern of the printing means (e.g., groove of the printing roller) are the same in pattern, and the difference in pattern width is within 20%, preferably within 10%, and more preferably within 5%.

In general, the tensile strength of a bonding line formed by a high frequency heating can vary depending on the type of adhesive, amount used, thickness of bonding line, type of fabric. With regard to a double fabric having a bonding pattern line for compartment separation formed according to the present invention and down products using the double fabric, a bonding line with a width of 2∼10 mm can represent a tensile strength of about 1∼20 kgf, particularly 1.2∼18 kgf, and preferably 1.5∼15 kgf.

According to an embodiment of the present invention, a bonding line with a 6mm width can represent a tensile strength of at least about 2.8 kgf, and preferably at least 3.8 kgf in case of a common fabric and a high-density fabric (for example, down-proof fabric), and a tensile strength of at least 1.8 kgf, preferably at least 4.0 kgf, and particularly at least 6.0 kgf in case of a functional fabric although it can vary depending on coating fabric or laminating fabric.

The tensile strength of a sewing line made in a conventional sewing manner is approximately 1∼4 kgf but can vary depending on the types of sewing thread and fabric. By comparison, the range of the tensile strength of the bonding pattern line according to the present invention is not low and can even be more excellent.

For some laminating fabric, the adhesiveness between the fabric body and laminated film is lower than the tensile strength of the bonding line formed by high frequency heating, and thus the effect of excellent tensile strength according to the present invention cannot be exerted sufficiently. However, since there are many other disadvantages when bonding the fabric by sewing method, the high frequency bonding method of the present invention would also be applied to this fabric more advantageously.

The bonding pattern line formed according to the present invention has an excellent resistance against a shearing force and thus have an excellent washing durability. When the products manufactured according to the present invention are subjected to a washing test commonly performed in order to verify the durability of a functional fabric product, it has been confirmed that there is no damage such as separation, release, or the like from the bonding area even after performing 10 times, 20 times and 30 times washing processes in which one washing process is composed of a washing for 40 minutes and a spin-drying for 40 minutes.

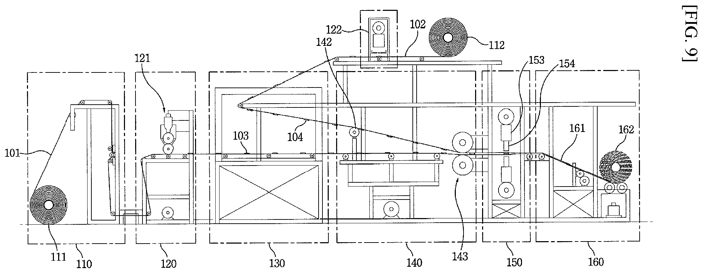

In the present invention, the device for performing the combining method of fabrics by bonding pattern lines is not specially limited, and the device described in the Korean Patent Application No. 10-2014-0132529 (or International Application PCT/KR2015/006779) (Title of Invention: Device for the Preparation of a Double Fabric for Down Products having bonding pattern lines formed by high-frequency bonding technique), and the devices of its variation. The device and the method for its operation described in the document is given as an example for reference in FIG. 9. FIG. 9 gives an example of the preparation device for double fabric combined with bonding pattern lines, and in order to use the method of the present invention for formation of bonding lines for overlock finish, formation of bonding lines for trouser cuffs finish, and formation of bonding lines for attaching attachments to garments, etc., it is natural that the device of FIG. 9 can be appropriately varied or modified for use.

The preparation device in Fig. 9 typically comprises an introducing means (110), a printing means (120), a drying means (130), a laminating means (140), a bonding means (150), and a winding means (160). The role and/or function of each device are provided as follows:

The introducing means (110) is a means connecting the inner fabric roll (111) and outer fabric roll (112) to the introducing part of the conveyer type or roller type process line so that the fabric can be introduced continuously to the process line.

The printing means (120) is a means for printing an adhesive on the fabric in a predetermined printing pattern, and can be selected from a stamping printing means, pressing press printing means, roller printing means or screen printing means, etc. The printing pattern is carved or embossed, preferably carved on the stamp, press or roller, and a printing pattern is drawn on the screen. The printing means can be installed on the first fabric (outer fabric) and second fabric (inner fabric) constituting the double fabric. The adhesive is printed on either one of the first fabric and second fabric or on both of them. Fig. 9 illustrates a printing means (121) of an inner fabric in the roller printing method and a printing means (122) of an outer fabric in the screen printing method.

Also, the adhesive (103) printed on the inner fabric and adhesive (104) printed on the outer fabric are here illustrated as being printed on the upward facing surfaces of the inner fabric (101) and outer fabric (102) moving horizontally. However, this is only for convenience, and the adhesive liquid may be printed on the downward facing surface of the fabric or on the fabric moving vertically or obliquely, if necessary. In such case, it would be preferable for the adhesive liquid to have a viscosity to an extent not to flow down.

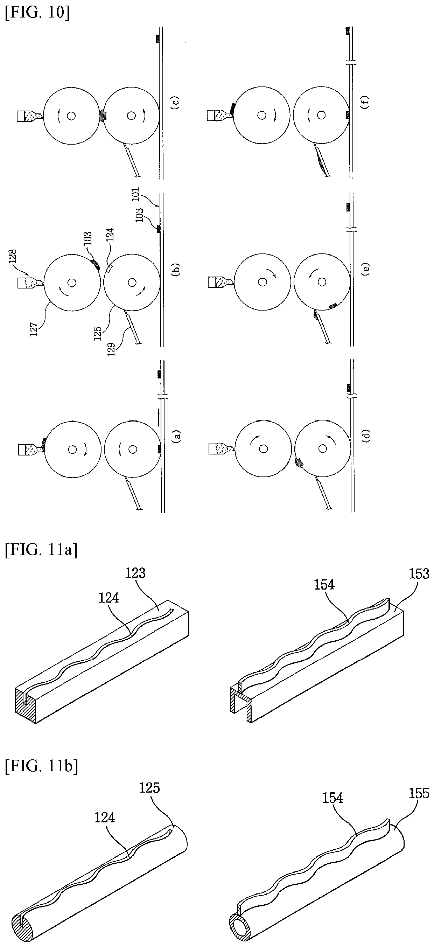

As a printing device for the inner surface, a roller printing device (121) can be exemplified and a printing method using the same is illustrated in Fig. 10. As illustrated in Fig. 10, the roller printing device (121) basically comprises an adhesive liquid supplier (128), a release roller (127), a main roller (125) and a guide knife (129). The adhesive liquid (103) is supplied from the adhesive liquid container (128) to the release roller (127) [*see Drawing* (a)], and then delivered to a groove (124) of the main roller (125) with a printing pattern carved on it [*see* Drawings (b) and (c)]. The adhesive liquid delivered to the groove (125) of the main roller is transferred to the fabric surface when being in contact with the fabric [*see* Drawings (d), (e) and (f)]. The adhesive liquid (103) printed on the fabric is dried with a subsequent drying device and then fixed on the fabric. The roller printing device (121) may further comprise a guide knife (129) for removing ink which is smudged outside the groove (124) (concave part of the printing pattern) of the main roller.

A screen printing device (122) is illustrated in Fig. 9 as a printing device for outer fabric, and such screen printing device (122) may comprise an adhesive liquid supplier, a screen, and a brush. In such screen printing device, an adhesive liquid is supplied from the adhesive liquid supplier to the screen, and then the adhesive liquid is coated on the fabric along the pattern drawn on the screen when the screen is brushed with a brush when the screen is in contact with the fabric. Thus coated adhesive liquid (104) can be dried at the subsequent drying device (130) to fix on the fabric.

At the drying means (130), the adhesive liquid printed on the fabric is dried. The adhesive should be attached on a fabric by being dried or solidified to a proper level so that the adhesive is not sticky or its pattern is not distorted during a laminating. In the drying step, the viscosity of the adhesive liquid adhered to the fabric surface can be decreased due to a high drying temperature, and thus the adhesive liquid can permeate more into the fabric and can be solidified therein. The inner fabric and the outer fabric may be dried at the same or different drying means. FIG. 9 illustrates that the drying of the inner fabric and the drying of the outer fabric are carried out at the same drying means, but is given only as an example and the present invention is not limited thereto. Drying can be carried out by heating, air blast, UV irradiation, or a combination thereof, but a heating element (e.g. heating filament), ventilator, luminous body or the like for them is not specifically illustrated in FIG. 9. According to a preferable embodiment of the present invention, the drying means can be selected from the tenter.

The laminating means (140) is a means that laminates fabrics by closely contacting an inner fabric with an outer fabric. For example, the inner fabric is closely contacted and laminated with the outer fabric so that the printing pattern of the inner fabric is contacted and coincided with the printing pattern of the outer fabric.

The above laminating means may further comprise a first alignment means (a means for adjusting the fabric location) for aligning the printing pattern of the inner fabric to be coincided with the printing pattern of the outer fabric during the process of closely contacting and laminating a first fabric (or a lower fabric or an inner fabric) and a second fabric (or an upper fabric or an outer fabric). In the present invention, the alignment for coinciding the printing pattern of an inner fabric with the printing pattern of an outer fabric can be achieved by adjusting the fabric location and/or the conveying speed. As such means, mention can be made on a variable roller means (142), a fabric speed controlling means, or the like. The variable roller (142) is in contact with the fabric at the fabric convey path, and the fabric path can be changed by moving the position up and down. In this way, the relative locations of the adhesives attached to the inner fabric and the outer fabric can be adjusted.

In general, the adjustment of the fabric delivery speed can be achieved by adjusting the speed of the printing process, the drying process, or the like. In such case, however, a problem may occur that it is required to adjust the delivery speed of fabric throughout the process line. Therefore, it can be easier or more efficient to align the location of the fabric by adjusting the delivery path rather than controlling the delivery speed.

The operation of the first alignment means employing a variable roller (142) can be explained as follows. For example, when an adhesive (103) attached to an inner fabric (101) is introduced into a laminating device slightly behind an adhesive (104) attached to an outer fabric (102), the moving speed of the outer fabric (102) can be slightly slowed down as a whole. Alternatively, the variable roller (142) located on the delivery path of the outer fabric can be moved upwardly to make the delivery path of the outer fabric (102) longer, and thereby the location of the adhesive (104) of the outer fabric can be adjusted backward. As a result, the pattern of the inner fabric and the pattern of the outer fabric can coincide with each other.

The first alignment means (the means for adjusting the fabric location) may further comprise, for example, a means for measuring the relative locations of adhesives attached to the inner fabric and outer fabric, and a means for adjusting the fabric delivery speed or fabric delivery path so that the relative locations are consistent or coincided. By controlling the means for measuring the relative locations in relation with means that can adjust a fabric delivery speed and/or a fabric delivery path, it is possible to automate, as well as to perform more accurately, the above alignment process.

Meanwhile, when a reinforced material (e.g., a mesh material) is employed, the introducing means, printing means, drying means and laminating means as well as their operating manners can be suitably modified or complemented.

The reinforced material can be continuously furnished by using a fabric roll (not shown) for a reinforced material, or can be inserted at a determined position by using an inserting means (not shown) for a reinforced material which can insert a cut portion of reinforced material between an inner fabric and an outer fabric.

The positions of a fabric roll (not shown) for a reinforced material and an inserting means (not shown) for a reinforced material are not particularly fixed or restricted. The fabric roll for a reinforced material should be positioned so that the reinforced material can be inserted in a continuous manner between an inner fabric and an outer fabric, and the inserting means for a cut reinforced material can be located preferably between a drying means and a laminating means.

For example, it is possible to use a mesh material (not shown) and a drying means (not shown) for a mesh means to firstly prepare an adhesive-attached mesh material, which can be inserted between an outer fabric and an inner fabric in a continuous or discontinuous manner. When the adhesive-attached mesh material is continuously inserted in a fabric form having a width similar to the inner or outer fabric, it is possible to carry out the laminating process simply by inserting between the inner fabric and the outer fabric. When the adhesive-attached mesh material is cut in a suitable width and then discontinuously inserted, it can be inserted at a suitable position (that is, a position that a bonding pattern line is formed) between the inner fabric and the outer fabric by using an inserting means (not shown) for a reinforced material, and then subjected to a laminating process.

The bonding means (150) is a means that can press fabrics and cure the adhesive with a high-frequency heating to combine the fabrics, and can be operated by utilizing a pressing press means or a roller pressing means which has, on the surface, a pressing protrusion or a pressing tip with a predetermined pressing pattern.

The laminated fabric and the protrusion are each placed on the bonding means (150) so that the pressing pattern of the protrusion coincides with the printing pattern of the laminated fabrics. Then, the protrusion is advanced toward the fabric and the fabric is pressed, and simultaneously the fabrics are bonded by curing the adhesive with high frequency heat.

According to a preferable embodiment of the present invention, the bonding means (150) may comprise a second alignment means (not shown) which can control the location of the fabric and/or protrusion so that the printing pattern of the adhesive coincides with the pressing pattern of the protrusion. The second alignment means may comprise a means controlling the delivery speed of laminated fabric, location of protrusion, roller speed, etc.

The location of the printing pattern of the laminated fabric can be slightly changed by controlling the location by a variable roller (not shown) or controlling delivery speed. Controlling the delivery speed of the laminated fabric has a problem that the delivery speed of the fabric should be changed throughout the entire process line. Thus, it is easier to control the location of the printing pattern on the laminated fabric by changing the location of the fabric laminated by a variable roller.

Meanwhile, the printing pattern can be made to coincide with the pressing pattern by controlling the location of the pressing pattern. The location of the pressing pattern, to be specific, the location of the pressing tip or protrusion of the pressing roller or press can be controlled by changing their operation speed (i.e., rotation speed of roller or pressing speed of press), or their location (e.g., height). Controlling the operation speed and/or location of the roller or press would be the easiest and most efficient. Thus, the purpose of the second alignment means which aligns the fabric and pressing tip so that the printing pattern coincide with the pressing pattern can be achieved by controlling the location of fabric, location of pressing tip, delivery speed of fabric, operating speed of pressing tip, etc. Preferably, it can be achieved by controlling the location or operation speed of pressing tip.

The second alignment means may comprise an adhesive location measuring device and/or a heating tip location controlling device. They are controlled by a computer to perform the alignment process more precisely, making it possible to automate the alignment process.

The first alignment means and second alignment means can use a technology and device that are similarly used in a printing technique for printing two or more colors in the field of printing, for example, a three-color printing technique printing in three colors, or a four-color printing technique printing in four colors.

According to an embodiment of the present invention, the printing pattern and pressing pattern may overlap each other in pattern (shape) with respect to the pattern center line. The difference in size (width) is 20% or less, and preferably 10% or less.

The winding means (160) refers to a means winding the double fabric (161) prepared continuously in the form of a roll (162) after going through a cooling process. However, it is not necessarily limited to the form of a winding roll, and double fabrics can be collected in any form suitable for delivery. The double fabric prepared in the bonding process is collected as it is or in the form of a roll or something else, so as to be immediately delivered to the subsequent down product preparing process, for example, marking and cutting process.

Meanwhile, the process of preparing double fabrics consisting of fabrics combined by bonding pattern lines in the preparation device shown in FIG. 9 can be explained in order as shown below, starting from the inner fabric and outer fabric. The inner fabric (101) is unwound from the inner fabric roll (111) and supplied to the printing means (120). The inner fabric printing device (121) of the printing means (120) is illustrated in Fig. 9 according to a roller printing technique. The adhesive liquid (103) is printed in a predetermined printing pattern on the inner surface of the inner fabric (101) provided. The inner fabric (101) printed with adhesive liquid (103) is delivered to the drying means (130) such as tenter and dried at a predetermined temperature for a predetermined period of time.

Also, the adhesive liquid can be printed even on the outer fabric (102), and preferably, the adhesive liquid is printed in the same printing pattern as the inner fabric. The adhesive liquid is printed in a predetermined printing pattern by the outer fabric printing device (122) on the inner surface of the outer fabric (101) unwound from the outer fabric roller (112). The outer fabric printing device (122) is illustrated as using the screen printing technique according to Fig. 9, but other printing means, for example, roller, press can be used. The outer fabric printed with adhesive liquid (103) is delivered to the drying means (130) such as tenter and dried at a predetermined temperature for a predetermined time.

The inner fabric (101) printed with adhesive liquid (103) and outer fabric (102) printed with adhesive liquid (104) are delivered to the laminating means (140) after being dried, and are laminated so that the printing pattern of the adhesive (103) coincides with the printing pattern of the adhesive liquid (104). In case there is a difference in the locations of the printing patterns, and they do not coincide with each other, the difference in printing patterns can be controlled by controlling the delivery speed of fabric, or controlling the delivery distance of the outer fabric using a delivery roller (142).

The inner fabric (101) and outer fabric (102) laminated so that their printing patterns coincide with each other are supplied to the high frequency bonding means (150), and high frequency heating is carried out while pressing the fabric with the pressing tip (154) of the high frequency bonding device (153) at the printing pattern, so that double fabric (161) can be prepared by bonding the inner fabric and outer fabric at a bonding line originated from the adhesive. The prepared double fabric (161) is wound to form a double fabric winding roll (162).

FIG. 11a is a drawing illustrating a press (123) having grooves (124) used in the printing means (130) and carved in a predetermined printing pattern, and a press (154) used in the high frequency bonding means (150) and formed with a protrusion (154) in the same pressing pattern as the printing pattern. FIG. 11b is a drawing illustrating the case where the printing means and bonding means in FIG. 11a have a roller, not a press. It shows a roller (125) with a groove carved (124) in it in a predetermined printing pattern and a roller (152) with a protrusion (153) embossed in the same pressing pattern as the printing pattern. In the press (123) and roller (125), the shaded areas on the left indicate sections cut, and both ends of the carved groove (124) may be closed (FIGS. 11a and 11b), or open.

In FIGS. 11a and 11b, the printing pattern of the carved groove (124) and pressing pattern of the protruded pressing tip (152) are the same in shape and size. To be specific, the pattern (shape) may overlap each other with respect to the pattern center line, and the difference in size (width) is 20% or less, and preferably 10% or less. The depth of the groove (124) and height of the pressing tip (154) do not correspond to each other, and may be selected independently. For example, the depth of the groove can be generally selected from 0.5∼5 mm, and preferably from 1∼3 mm, and the height of the protrusion can be selected from 1∼30 mm, and preferably from 5∼20 mm.

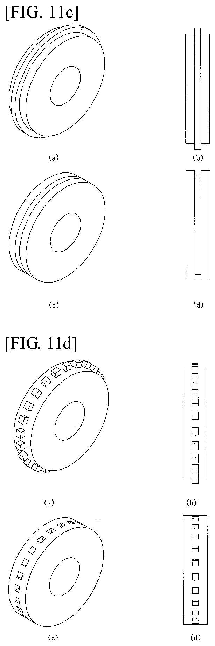

FIG. 11c is a drawing illustrating a wheel-type printing roller (c) in which a printing pattern of a straight line pattern is carved and a wheel-type pressing roller (a) in which a corresponding pressing pattern of a straight line pattern is protruded, and Drawings (d) and (b) are sectional views thereof respectively.

FIG. 11d is a drawing illustrating a wheel-type printing roller (c) in which a printing pattern of a dotted line pattern is carved and a wheel-type pressing roller (a) in which a corresponding pressing pattern of a dotted line pattern is protruded, and Drawings (d) and (b) are sectional views thereof respectively.

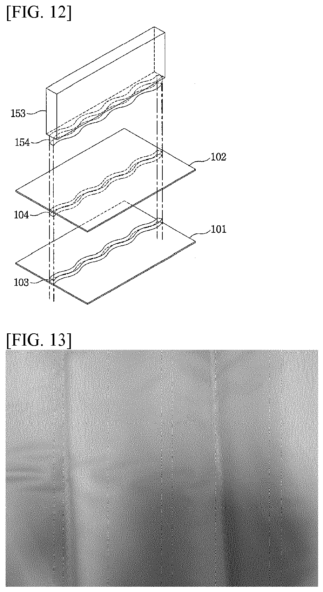

FIG. 12 is a conceptual diagram illustrating the concept of a printing pattern coinciding with a pressing pattern, which shows a condition that the pressing pattern of the protruded pressing tip (154), the printing pattern of the adhesive (104) printed on an outer fabric (102), and the printing pattern of the adhesive (105) printed on an inner fabric (103) are aligned to coincide with each other.

FIG. 13 is a photograph showing a bonding pattern line formed by the present invention, and illustrate that patterns in the form of waves formed on the surface of the fabrics.

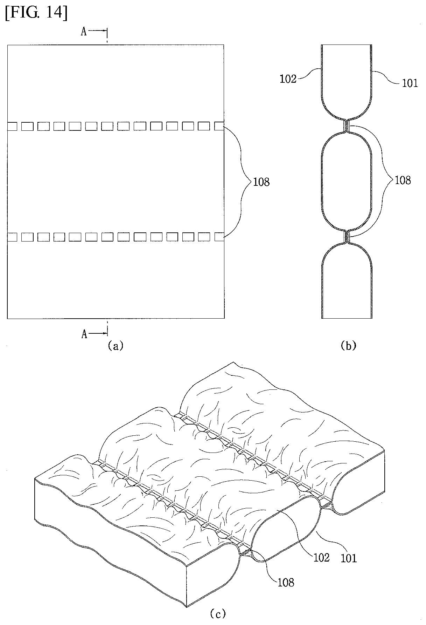

FIG. 14 is a drawing illustrating the surface and structure of a double fabric or down product having a bonding pattern line for compartment separation formed by the high frequency bonding technique; the drawing (a) shows an outer surface of a fabric on which a pattern line (108) of a discontinuous dotted line pattern is formed; the drawing (b) is a sectional view showing the inner structure cut along the A-A cutting line; and the drawing (c) is an oblique view of the overall shape of the fabrics around the bonding pattern line, showing in 3-dimension structures where the inner fabric (101) and the outer fabric (102) are connected and where they are not. In Drawing (b), since the pattern line (108) is in the form of a dotted line discontinuously, it can be understood that the pattern line is indicated dually at the bonding part.

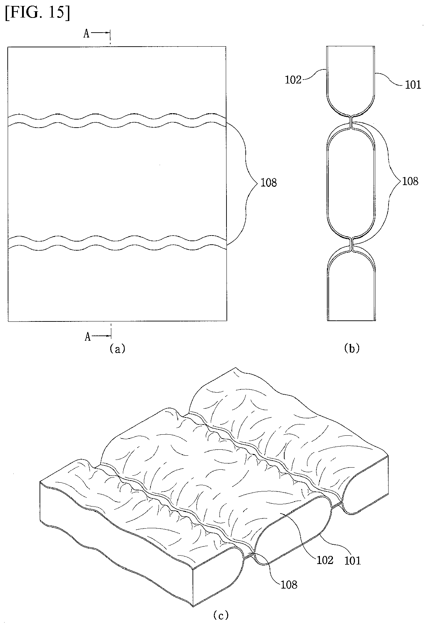

FIG. 15 is a drawing illustrating the surface of the fabric and the structure of a bonding pattern line formed by high-frequency bonding technique, showing the pattern line having a continuous wave pattern instead of the discontinuous dotted line patter of FIG. 1, and the internal structure thereof.

According to the present invention, the printing means and pressing means can be selected from a combination of devices of the same type, i.e., from a combination of printing press-pressing press, or a combination of printing roller-pressing roller, and from a combination of devices of different types, for example, a combination of printing press-pressing roller, printing roller-pressing press, or printing screen-pressing press.

In the specification of the present invention, explanation on the method of carrying out the high frequency bonding process by printing an adhesive on both the inner fabric and outer fabric can be applied to the method of carrying out high frequency bonding process by printing the adhesive on only one of the inner fabric and outer fabric by properly modifying the process. Such modification can be easily understood by a person having ordinary skill in the art.

### Industrial Applicability

The present invention can be industrially used in the industry of clothing, bedding and sewing.

**Description on Reference Numerals**

| | | | |
|---|---|---|---|
| 110: | an introducing means | 120: | a printing means |
| 130: | a drying means | 140: | a laminating means |
| 150: | a bonding means | 160: | a winding means |
| 101, 102: | an inner fabric and an outer fabric | | |
| 111,112: | an inner fabric roll and an outer fabric roll | | |
| 103, 104: | adhesive | 105: | adhesive fixed to a reinforced material |
| 106: | cured adhesive | | |
| 107, 108: | a bonding line (cured adhesive) and its pattern line | | |
| 109: | pattern of a surface pattern line | | |
| 121, 122: | an inner fabric printing device an outer fabric printing device | | |
| 123, 125: | a printing press and a printing roller (mainroller) | | |
| 127, 129: | a release roller and a guide knife | | |
| 153, 155: | a pressing press and a pressing roller | | |
| 127, 157: | a wheel-type printing roller and a wheel-type pressing roller | | |
| 158, 159: | a support and a roller-type support | | |
| 124: | grooves (intaglio) | 154: | protrusion (pressing tip) |
| 142: | a variable roller | 143: | a laminating roller |
| 161: | a double fabric | 162: | a double fabric winding roll |

## Claims

1. A seamless combining method for fabrics forming a bonding pattern line (108) in a fabric product other than a down product, by high-frequency heating under pressing an inner fabric (101) and an outer fabric (102) using an adhesive (103, 104), and thereby combining the inner fabric and the outer fabric, **characterized in that** the method comprising:
(1) a preparing step of preparing an inner fabric (101) and an outer fabric (102),
(2) a printing step of printing a heat-reactive liquid adhesive (103) in a predetermined printing pattern (107) on an inner surface of the inner fabric (101) or on an inner surface of the outer fabric (102),
(3) a drying step of drying the liquid adhesive (103) printed on the inner surface of the inner fabric (101) or on the inner surface of the outer fabric (102),
(4) a laminating step of laminating the inner fabric (101) and the outer fabric (102), and
(5) a high-frequency bonding step of high-frequency heating and simultaneously pressing both the laminated inner and outer fabrics in a pressing pattern which is the same with said printing pattern to form the bonding pattern line (108, 109), and
said printing pattern and pressing pattern are the same in pattern and have a width difference of 10% or less.

2. A seamless combining method for fabrics forming a bonding pattern line (108) in a fabric product other than a down product, by high-frequency heating under pressing an inner fabric (101) and an outer fabric (102) using an adhesive (103, 104), and thereby combining the inner fabric and the outer fabric, **characterized in that** the method comprising:
(1) a preparing step of preparing the inner fabric (101) and the outer fabric (102),
(2) a printing step of printing a heat-reactive liquid adhesive (103) in a predetermined printing pattern on a mesh-type reinforced material (105),
(3) a drying step of drying the liquid adhesive (103) printed on the mesh-type reinforced material (105),
(4) a laminating step of laminating the inner fabric (101), the mesh-type reinforced material (105) and the outer fabric (102), and
(5) a high-frequency bonding step of high-frequency heating and simultaneously pressing both the laminated mesh-type reinforced material (105) and inner and outer fabrics (101, 102) in a pressing pattern which is the same with said printing pattern to form the bonding pattern line (108, 109), and
said printing pattern and pressing pattern are the same in pattern and have a width difference of 10% or less.

3. The seamless combining method for fabrics according to Claim 1, **characterized in that** a liquid adhesive (103) is printed in a same printing pattern on an inner fabric (101) and an outer fabric (102), and the inner fabric (101) and the outer fabric (102) are laminated so that the printing pattern of the inner fabric is coincided with the printing pattern of the outer fabric.

4. The seamless combining method for fabrics according to Claim 1 or 2, **characterized in that** said printing pattern has a width of 1∼20 mm.

5. The seamless combining method for fabrics according to Claim 1 or 2, **characterized in that** said adhesive is an epoxy-type adhesive.

6. The seamless combining method for fabrics according to Claim 1 or 2, **characterized in that** said high-frequency bonding is carried out by using a high frequency of 7 KHz ∼ 400 KHz.

7. A fabric product produced by the seamless combining method for fabrics according to Claim 1, the fabric product wherein an inner fabric (101) and an outer fabric (102) are combined with a bonding pattern line (108) in the fabric product other than the down product, **characterized in that**:
- said bonding pattern line (108) is composed of an inner bonding line formed between the inner fabric (101) and the outer fabric (102) and a surface pattern line (109) formed on an outer surface of the inner fabric or the outer fabric,
- said inner bonding line is formed inside between the inner fabric (101) and the outer fabric (102) by fixing said heat-reactive adhesive (103) on the surface of the inner or outer fabrics in a predetermined printing pattern, high-frequency heating and curing said fixed adhesive, and thus combining said fabrics with the reacted and cured adhesive (106),
- said surface pattern line is formed on the surface of the outer fabric by pressing said inner fabric and outer fabric together in a predetermined pressing pattern under the high-frequency heating to cause a difference in surface texture,
- the inner bonding line issued from said printing line and the surface pattern line issued from said pressing pattern are the same in pattern (shape) and have a width difference of 10% or less, and
- said surface pattern line is unified with the inner bonding line by the adhesive oozed onto the outer surface of the inner fabric or the outer fabric and then cured.

8. A fabric product wherein an inner fabric (101) and an outer fabric (102) are combined with a bonding pattern line (108) between the inner fabric (101) and the outer fabric (102) according to Claim 7, **characterized in that** a reinforced material (105) is intercalated between an inner fabric (101) and an outer fabric (102).

9. A fabric product wherein an inner fabric (101) and an outer fabric (102) are combined with a bonding pattern line between the inner fabric (101) and the outer fabric (102) according to Claim 8, **characterized in that** the reinforced material (105) is selected from mesh-type reinforced materials which have a mesh thread thickness of 0.01-2 mm and a mesh eye size of 0.1-5 mm.

10. A fabric product wherein an inner fabric and an outer fabric are combined with a bonding pattern line (108) between the inner fabric (101) and the outer fabric (102) according to Claim 8, **characterized in that** the reinforced material is selected from reinforced materials on which an adhesive (103) is printed and dried in a predetermined pattern (106).

## Patentansprüche

1. Verfahren zum nahtlosen Verbinden von Geweben, wobei eine Bondmusterlinie (108) in einem Gewebeprodukt, ausgenommen ein Daunenprodukt, gebildet wird, und zwar durch Hochfrequenzerwärmen unter Pressen eines inneren Gewebes (101) und eines äußeren Gewebes (102) unter Verwendung eines Klebstoffs (103, 104) und dadurch Verbinden des inneren Gewebes und des äußeren Gewebes, **dadurch gekennzeichnet, dass** das Verfahren folgende Schritte umfasst:
(1) einen Vorbereitungsschritt des Vorbereitens eines inneren Gewebes (101) und eines äußeren Gewebes (102),
(2) einen Druckschritt des Druckens eines wärmereaktiven Flüssigklebstoffs (103) in einem vorbestimmten Druckmuster (107) auf eine Innenfläche des inneren Gewebes (101) oder auf eine Innenfläche des äußeren Gewebes (102),
(3) einen Trocknungsschritt des Trocknens des Flüssigklebstoffs (103), der auf die Innenfläche des inneren Gewebes (101) oder auf die Innenfläche des äußeren Gewebes (102) gedruckt ist,
(4) einen Laminierungsschritt des Laminierens des inneren Gewebes (101) und des äußeren Gewebes (102), und
(5) einen Hochfrequenzbondingschritt des Hochfrequenzerwärmens und gleichzeitigen Pressens beider laminierten inneren und äußeren Gewebe in einem Pressmuster, das mit dem Druckmuster identisch ist, zum Bilden der Bondmusterlinie (108, 109), und
wobei das Druckmuster und das Pressmuster ein gleiches Muster und einen Breitenunterschied von 10% oder weniger aufweisen.

2. Verfahren zum nahtlosen Verbinden von Geweben, wobei eine Bondmusterlinie (108) in einem Gewebeprodukt, ausgenommen ein Daunenprodukt, gebildet wird, und zwar durch Hochfrequenzerwärmen unter Pressen eines inneren Gewebes (101) und eines äußeren Gewebes (102) unter Verwendung eines Klebstoffs (103, 104) und dadurch Verbinden des inneren Gewebes und des äußeren Gewebes, **dadurch gekennzeichnet, dass** das Verfahren folgende Schritte umfasst:
(1) einen Vorbereitungsschritt des Vorbereitens des inneren Gewebes (101) und des äußeren Gewebes (102),
(2) einen Druckschritt des Druckens eines wärmereaktiven Flüssigklebstoffs (103) in einem vorbestimmten Druckmuster auf ein netzartiges verstärktes Material (105),
(3) einen Trocknungsschritt des Trocknens des Flüssigklebstoffs (103), der auf das netzartige verstärkte Material (105) gedruckt ist,
(4) einen Laminierungsschritt des Laminierens des inneren Gewebes (101), des netzartigen verstärkten Materials (105) und des äußeren Gewebes (102), und
(5) einen Hochfrequenzbondingschritt des Hochfrequenzerwärmens und gleichzeitigen Pressens sowohl des laminierten netzartigen verstärkten Materials (105) als auch des inneren und des äußeren Gewebes (101, 102) in einem Pressmuster, das mit dem Druckmuster identisch ist, zum Bilden der Bondmusterlinie (108, 109), und wobei das Druckmuster und das Pressmuster ein gleiches Muster und einen Breitenunterschied von 10% oder weniger aufweisen.

3. Verfahren zum nahtlosen Verbinden von Geweben nach Anspruch 1, **dadurch gekennzeichnet, dass** ein Flüssigklebstoff (103) in einem gleichen Druckmuster auf ein inneres Gewebe (101) und ein äußeres Gewebe (102) gedruckt wird, und das innere Gewebe (101) und das äußere Gewebe (102) so laminiert werden, dass das Druckmuster des inneren Gewebes mit dem Druckmuster des äußeren Gewebes zur Deckung kommt.

4. Verfahren zum nahtlosen Verbinden von Geweben nach Anspruch 1 oder 2, **dadurch gekennzeichnet, dass** das Druckmuster eine Breite von 1∼20 mm aufweist.

5. Verfahren zum nahtlosen Verbinden von Geweben nach Anspruch 1 oder 2, **dadurch gekennzeichnet, dass** der Klebstoff ein Klebstoff vom Epoxid-Typ ist.

6. Verfahren zum nahtlosen Verbinden von Geweben nach Anspruch 1 oder 2, **dadurch gekennzeichnet, dass** das Hochfrequenzbonden unter Verwendung einer Hochfrequenz von 7 kHz ∼ 400 kHz durchgeführt wird.

7. Gewebeprodukt, das mit dem Verfahren zum nahtlosen Verbinden von Geweben nach Anspruch 1 hergestellt ist, wobei ein inneres Gewebe (101) und ein äußeres Gewebe (102) mit einer Bondmusterlinie (108) im Gewebeprodukt, ausgenommen das Daunenprodukt, verbunden sind, **dadurch gekennzeichnet, dass**:
- die Bondmusterlinie (108) aus einer inneren Bondlinie, die zwischen dem inneren Gewebe (101) und dem äußeren Gewebe (102) gebildet ist, und einer Oberflächenmusterlinie (109) besteht, die auf einer Außenfläche des inneren Gewebes oder des äußeren Gewebes gebildet ist,
- die innere Bondlinie innen zwischen dem inneren Gewebe (101) und dem äußeren Gewebe (102) gebildet wird, indem der wärmereaktive Klebstoff (103) auf der Oberfläche des inneren oder des äußeren Gewebes in einem vorbestimmten Druckmuster fixiert wird, der fixierte Klebstoff mit Hochfrequenz erwärmt und ausgehärtet wird und somit die Gewebe mit dem reagierten und ausgehärteten Klebstoff (106) verbunden werden,
- die Oberflächenmusterlinie auf der Oberfläche des äußeren Gewebes durch Pressen des inneren Gewebes und des äußeren Gewebes in einem vorbestimmten Pressmuster unter der Hochfrequenzerwärmung gebildet wird, um einen Unterschied in der Oberflächentextur zu bewirken,
- die innere Bondlinie, die von der Drucklinie herrührt, und die Oberflächenmusterlinie, die vom Pressmuster herrührt, im Muster (Form) gleich sind und einen Breitenunterschied von 10% oder weniger aufweisen, und
- die Oberflächenmusterlinie durch den Klebstoff, der auf die Außenfläche des inneren Gewebes oder des äußeren Gewebes aufgetragen und dann ausgehärtet wird, mit der inneren Bondlinie vereinigt wird.

8. Gewebeprodukt, wobei ein inneres Gewebe (101) und ein äußeres Gewebe (102) mit einer Bondmusterlinie (108) zwischen dem inneren Gewebe (101) und dem äußeren Gewebe (102) gemäß Anspruch 7 verbunden sind, **dadurch gekennzeichnet, dass** ein verstärktes Material (105) zwischen einem inneren Gewebe (101) und einem äußeren Gewebe (102) geschichtet ist.

9. Gewebeprodukt, wobei ein inneres Gewebe (101) und ein äußeres Gewebe (102) mit einer Bondmusterlinie zwischen dem inneren Gewebe (101) und dem äußeren Gewebe (102) gemäß Anspruch 8 verbunden sind, **dadurch gekennzeichnet, dass** das verstärkte Material (105) aus netzartigen verstärkten Materialien ausgewählt ist, die eine Netzfadendicke von 0,01∼2 mm und eine Maschengröße von 0,1∼5 mm aufweisen.

10. Gewebeprodukt, wobei ein inneres Gewebe und ein äußeres Gewebe mit einer Bondmusterlinie (108) zwischen dem inneren Gewebe (101) und dem äußeren Gewebe (102) gemäß Anspruch 8 verbunden sind, **dadurch gekennzeichnet, dass** das verstärkte Material aus verstärkten Materialien ausgewählt ist, auf die ein Klebstoff (103) in einem vorbestimmten Muster (106) aufgedruckt und getrocknet wird.

## Revendications

1. Procédé de combinaison sans couture pour des tissus formant une ligne de motifs de soudure (108) dans un produit en tissu autre qu'un produit en duvet, par chauffage à haute fréquence sous pression d'un tissu intérieur (101) et d'un tissu extérieur (102) à l'aide d'un adhésif (103, 104), et combinant ainsi le tissu intérieur et le tissu extérieur, le procédé étant **caractérisé en ce qu'**il comprend :
(1) une étape de préparation consistant à préparer un tissu intérieur (101) et un tissu extérieur (102),
(2) une étape d'impression consistant à imprimer un adhésif liquide (103) réagissant à la chaleur selon un motif d'impression prédéterminé (107) sur une surface intérieure du tissu intérieur (101) ou sur une surface intérieure du tissu extérieur (102),
(3) une étape de séchage consistant à sécher l'adhésif liquide (103) imprimé sur la surface intérieure du tissu intérieur (101) ou sur la surface intérieure du tissu extérieur (102),
(4) une étape de stratification consistant à stratifier le tissu intérieur (101) et le tissu extérieur (102), et
(5) une étape de soudure à haute fréquence consistant à chauffer à haute fréquence et simultanément à presser à la fois les tissus intérieur et extérieur stratifiés selon un motif de pression qui est le même que ledit motif d'impression dans le but de former la ligne de motifs de soudure (108, 109), et
lesdits motif d'impression et motif de pression présentent le même motif et présentent une différence de largeurs inférieure ou égale à 10 %.

2. Procédé de combinaison sans couture pour des tissus formant une ligne de motifs de soudure (108) dans un produit en tissu autre qu'un produit en duvet, par chauffage à haute fréquence sous pression d'un tissu intérieur (101) et d'un tissu extérieur (102) à l'aide d'un adhésif (103, 104), et combinant de cette manière le tissu intérieur et le tissu extérieur, le procédé étant **caractérisé en ce qu'**il comprend :
(1) une étape de préparation consistant à préparer le tissu intérieur (101) et le tissu extérieur (102),
(2) une étape d'impression consistant à imprimer un adhésif liquide (103) réagissant à la chaleur selon un motif d'impression prédéterminé sur un matériau renforcé de type maille (105),
(3) une étape de séchage consistant à sécher l'adhésif liquide (103) imprimé sur le matériau renforcé de type maille (105),
(4) une étape de stratification consistant à stratifier le tissu intérieur (101), le matériau renforcé de type maille (105) et le tissu extérieur (102), et
(5) une étape de soudure à haute fréquence consistant à chauffer à haute fréquence et simultanément à presser à la fois les matériau renforcé de type maille (105) et tissus intérieur et extérieur (101, 102) stratifiés selon un motif de pression qui est le même que ledit motif d'impression dans le but de former la ligne de motifs de soudure (108, 109), et
lesdits motif d'impression et motif de pression présentent le même motif et présentent une différence de largeurs inférieure ou égale à 10 %.

3. Procédé de combinaison sans couture pour des tissus selon la revendication 1, **caractérisé en ce qu'**un adhésif liquide (103) est imprimé selon un même motif d'impression sur un tissu intérieur (101) et un tissu extérieur (102), et le tissu intérieur (101) et le tissu extérieur (102) sont stratifiés de manière à faire coïncider le motif d'impression du tissu intérieur avec le motif d'impression du tissu extérieur.

4. Procédé de combinaison sans couture pour des tissus selon la revendication 1 ou 2, **caractérisé en ce que** ledit motif d'impression présente une largeur comprise entre 1 et 20 mm.

5. Procédé de combinaison sans couture pour des tissus selon la revendication 1 ou 2, **caractérisé en ce que** ledit adhésif est un adhésif de type époxy.

6. Procédé de combinaison sans couture pour des tissus selon la revendication 1 ou 2, **caractérisé en ce que** ladite soudure à haute fréquence est réalisée à l'aide d'une haute fréquence comprise entre 7 kHz et 400 kHz.

7. Produit en tissu produit par le procédé de combinaison sans couture pour des tissus selon la revendication 1, produit en tissu dans lequel un tissu intérieur (101) et un tissu extérieur (102) sont combinés avec une ligne de motifs de soudure (108) dans le produit en tissu autre que le produit en duvet, **caractérisé en ce que** :
- ladite ligne de motifs de soudure (108) se compose d'une ligne de soudure intérieure formée entre le tissu intérieur (101) et le tissu extérieur (102) et d'une ligne de motifs de surface (109) formée sur une surface extérieure du tissu intérieur ou du tissu extérieur,
- ladite ligne de soudure intérieure est formée à l'intérieur entre le tissu intérieur (101) et le tissu extérieur (102) par fixation dudit adhésif (103) réagissant à la chaleur sur la surface des tissus intérieur ou extérieur selon un motif d'impression prédéterminé, chauffage à haute fréquence et durcissement dudit adhésif fixé, et ainsi combinaison desdits tissus avec l'adhésif (106) ayant réagi et durci,
- ladite ligne de motifs de surface est formée sur la surface du tissu extérieur par pression ensemble desdits tissu intérieur et tissu extérieur selon un motif de pression prédéterminé sous le chauffage à haute fréquence afin d'occasionner une différence de texture de surface,
- la ligne de soudure intérieure issue de ladite ligne d'impression et la ligne de motifs de surface issue dudit motif de pression présentent le même motif (la même forme) et présentent une différence de largeurs inférieure ou égale à 10 %, et
- ladite ligne de motifs de surface est unifiée avec la ligne de soudure intérieure par l'adhésif qui suinte sur la surface extérieure du tissu intérieur ou du tissu extérieur puis durcit.

8. Produit en tissu dans lequel un tissu intérieur (101) et un tissu extérieur (102) sont combinés avec une ligne de motifs de soudure (108) entre le tissu intérieur (101) et le tissu extérieur (102) selon la revendication 7, **caractérisé en ce qu'**un matériau renforcé (105) est intercalé entre un tissu intérieur (101) et un tissu extérieur (102).

9. Produit en tissu dans lequel un tissu intérieur (101) et un tissu extérieur (102) sont combinés avec une ligne de motifs de soudure entre le tissu intérieur (101) et le tissu extérieur (102) selon la revendication 8, **caractérisé en ce que** le matériau renforcé (105) est sélectionné parmi des matériaux renforcés de type maille présentant une épaisseur de fil de maille comprise entre 0,01 et 2 mm et une taille d'ouverture de maille comprise entre 0,1 et 5 mm.

10. Produit en tissu dans lequel un tissu intérieur et un tissu extérieur sont combinés avec une ligne de motifs de soudure (108) entre le tissu intérieur (101) et le tissu extérieur (102) selon la revendication 8, **caractérisé en ce que** le matériau renforcé est sélectionné parmi des matériaux renforcés sur lesquels un adhésif (103) est imprimé et séché selon un motif prédéterminé (106).
